# EUROPEAN PATENT APPLICATION

(11) **EP 4 780 128 A1**
(43) Date of publication of application: **22.07.2026**
(21) Application number: 24870607.9
(22) Date of filing: 20.09.2024
(51) Int. Cl.: H04W 76/10

(54) **COMMUNICATION METHOD FOR SENSING, AND APPARATUS**

(30) Priority: 28.09.2023 CN 202311282969
(71) Applicant: HUAWEI TECHNOLOGIES CO., LTD., Shenzhen 518129 (CN)
(72) Inventor: WU, Wenbin, Shenzhen, Guangdong 518129 (CN); ZHANG, Shenhu, Shenzhen, Guangdong 518129 (CN); CHEN, Lei, Shenzhen, Guangdong 518129 (CN)
(74) Representative: Isarpatent
(86) International application number: PCT/CN2024/120047
(87) International publication number: WO 2025/067063

(57) **Abstract**

Embodiments of this disclosure relate to a communication method, device, and system, a chip, a medium, and a program product. The communication method includes: A terminal device in an idle state or an inactive state receives indication information indicating a sensing capability requirement; and initiates connection setup or connection resumption based on determining that the terminal device meets the sensing capability requirement. In this manner, the terminal device in the idle state or the inactive state can participate in a sensing process, thereby improving a success rate of a sensing task, and avoiding poor sensing performance caused by an insufficient quantity of the terminal devices in a connected state.

## Description

This application claims priority to Chinese Patent Application No. 202311282969.8, filed with the China National Intellectual Property Administration on September 28, 2023 and entitled "COMMUNICATION METHOD AND APPARATUS FOR SENSING", which is incorporated herein by reference in its entirety.

### TECHNICAL FIELD

This disclosure relates to the communication field, and more specifically, to a communication method, apparatus, and system for sensing, a computer-readable storage medium, and a computer program product.

### BACKGROUND

An integrated sensing and communication (integrated sensing and communication, ISAC) technology is a key technology in a next-generation wireless communication network, and is intended to implement sensing functions such as positioning, detection, imaging, and recognition on a target by using various propagation characteristics of a wireless signal, to obtain information about a surrounding physical environment. A sensing signal is transmitted by a network element (for example, a base station or a terminal device) participating in a sensing process, reflected by a target in an environment, and then received by the same network element or another network element participating in the sensing process. A device that receives a reflected signal of the sensing signal extracts a feature (for example, information such as a location and a speed) of the target in the environment based on the reflected signal. Based on whether network elements participating in the sensing process are different and whether sending and receiving network elements are the same device, there are a plurality of basic forms of sensing modes related to a wireless air interface. For a sensing mode in which a terminal device is involved, selecting a terminal device that has a sensing capability is an important process of implementing a wireless sensing process. However, various aspects of the integrated sensing and communication technology still need to be further researched and improved to optimize its performance.

### SUMMARY

Example embodiments of this disclosure provide a method that can optimize sensing performance, and relate to a communication method, apparatus, and system, a computer-readable storage medium, and a computer program product.

According to a first aspect, an embodiment of this disclosure provides a method. Optionally, the method may be performed by a terminal device, or may be an apparatus (for example, a processor, a chip, or a chip system) used in a terminal device, or may be a logical module or software that can implement all or some functions of a terminal device. The method includes: A terminal device in an idle state or an inactive state receives indication information indicating a sensing capability requirement; and initiates connection setup or connection resumption based on determining that the terminal device meets the sensing capability requirement, or when the terminal device meets the sensing capability requirement. In this manner, the terminal device that meets the sensing capability requirement and that is in the idle state or the inactive state can participate in a sensing process, thereby improving a success rate of a sensing task, and avoiding poor sensing performance caused by an insufficient quantity of terminal devices in a connected state.

In some embodiments, the method further includes: sending sensing capability information of the terminal device in response to receiving a connection setup message or a connection resume message. In this manner, the sensing capability information may be reported in response to receiving the connection setup message or the connection resume message, so that a network device learns of a sensing capability of the terminal device in an idle state or an inactive state, to select a terminal device that participates in the sensing process. Reporting the sensing capability information in response to receiving the connection setup message or the connection resume message can reduce signaling overheads used for sensing capability reporting, and reduce a delay.

In some embodiments, the method further includes: sending sensing capability information of the terminal device in response to receiving a first request message used to request the sensing capability information. In this manner, the sensing capability information can be reported based on an indication from the network device, so that the network device can select, based on an actual situation, a terminal device that meets the sensing capability requirement, to report the sensing capability information. Therefore, communication resources required for reporting the sensing capability information can be reduced.

In some embodiments, the sensing capability requirement includes at least one of the following: a sensing type, a sensing range, a sensing resolution, or a sensing accuracy. Based on a specific sensing capability requirement, it can be ensured that the terminal device that establishes or resumes a connection can execute a sensing task with a high success rate, thereby improving sensing performance.

In some embodiments, the indication information is included in a paging message. In this manner, the terminal device can determine, when the terminal device is in an idle state or an inactive state, whether the terminal device meets the sensing capability requirement, thereby avoiding a case in which the terminal device that does not meet the sensing capability requirement establishes or resumes a connection, and reducing signaling overheads.

In some embodiments, the method further includes sending information related to a location of the terminal device. In this manner, the network device may select, based on location information of the terminal device, a terminal device that participates in the sensing process, thereby improving sensing performance.

In some embodiments, the method includes: receiving configuration information and state transition information that are related to a sensing process, where the state transition information indicates the terminal device to transition from a connected state to an idle state or an inactive state; transitioning from the connected state to the idle state or the inactive state based on the state transition information; and after transitioning to the idle state or the inactive state, performing the sensing process based on the configuration information. In this manner, the terminal device can be released to the idle state or the inactive state to perform the sensing process, thereby reducing signaling overheads and power consumption caused by the connected state.

According to a second aspect, an embodiment of this disclosure provides a method. The method may be applied to an access network device, or may be an apparatus (for example, a processor, a chip, or a chip system) used in an access network device, or may be a logical module or software that can implement all or some functions of an access network device. The method includes: sending, to a terminal device in an idle state or an inactive state, indication information indicating a sensing capability requirement; and receiving a connection setup request message or a connection resume request message from the terminal device. In this manner, it can be determined that the terminal device that requests to establish or resume a connection meets the sensing capability requirement, so that the terminal device in the idle state or the inactive state can be selected to participate in the sensing process, thereby improving a success rate of a sensing task, and avoiding poor sensing performance caused by an insufficient quantity of terminal devices in the connected state.

In some embodiments, the method further includes: receiving sensing capability information of the terminal device from the terminal device based on sending a connection setup message or a connection resume message to the terminal device. In this manner, when the terminal device in an idle state or an inactive state meets the sensing capability requirement, a sensing capability of the terminal device in the idle state or the inactive state can be learned, to select a terminal device that participates in the sensing process. Receiving the sensing capability information in response to sending the connection setup message or the connection resume message can reduce signaling overheads used for sensing capability reporting, and reduce a delay.

In some embodiments, the method further includes: receiving sensing capability information of the terminal device from the terminal device based on sending, to the terminal device, a first request message used to request the sensing capability information. In this manner, the network device can select, based on an actual situation, a terminal device that meets the sensing capability requirement, to report the sensing capability information. Therefore, communication resources required for reporting the sensing capability information can be reduced.

In some embodiments, the sensing capability requirement includes at least one of the following: a sensing type, a sensing range, a sensing resolution, or a sensing accuracy. By providing a specific sensing capability requirement, it can be ensured that the terminal device that establishes or resumes a connection can execute a sensing task with a high success rate, thereby improving sensing performance.

In some embodiments, the indication information is included in a paging message. In this manner, the terminal device can determine, when the terminal device is in an idle state or an inactive state, whether the terminal device meets the sensing capability requirement, thereby avoiding a case in which the terminal device that does not meet the sensing capability requirement establishes or resumes a connection, and reducing signaling overheads.

In some embodiments, the indication information is first indication information, and the method further includes: receiving, from a core network device, second indication information indicating the sensing capability requirement, where the first indication information is determined based on the second indication information. In this manner, it can be determined that the terminal device that requests to establish or resume a connection meets the sensing capability requirement from the core network device. Therefore, the terminal device in an idle state or an inactive state can participate in the sensing process.

In some embodiments, the method further includes: sending the sensing capability information of the terminal device to the core network device. In this way, the core network device can select, based on the sensing capability information of the terminal device in an idle state or an inactive state, a terminal device that participates in the sensing process, thereby improving a success rate of the sensing task, and avoiding poor sensing performance caused by an insufficient quantity of terminal devices in a connected state.

In some embodiments, the method further includes: receiving information related to a location of the terminal device from the terminal device; and sending the information related to the location of the terminal device to the core network device. In this manner, the core network device may select, based on location information of the terminal device, a terminal device that participates in the sensing process, thereby improving sensing performance.

In some embodiments, the method further includes: receiving, from the core network device, an indication of at least one terminal device that is configured to perform a sensing process, where the at least one terminal device includes the terminal device. In this manner, the terminal device in an idle state or an inactive state can participate in the sensing process.

In some embodiments, the method further includes: sending, to the terminal device, configuration information and state transition information that are related to the sensing process, where the state transition information indicates the terminal device to transition from a connected state to an idle state or an inactive state. In this manner, the terminal device can be released to the idle state or the inactive state to perform the sensing process, thereby reducing signaling overheads and power consumption caused by the connected state.

According to a third aspect, an embodiment of this disclosure provides a method. The method may be applied to a core network device, or may be an apparatus (for example, a processor, a chip, or a chip system) used in a core network device, or may be a logical module or software that can implement all or some functions of a core network device. The method includes: sending second indication information or a second request message, where the second indication information indicates a sensing capability requirement, and the second request message is used by at least one access network device to determine a terminal device configured to perform a sensing process; and receiving a response message for the second indication information or the second request message. In this manner, the terminal device in an idle state or an inactive state can participate in a sensing process, thereby improving a success rate of a sensing task, and avoiding poor sensing performance caused by an insufficient quantity of terminal devices in a connected state.

In some embodiments, the method further includes: determining the at least one access network device configured to perform the sensing process; and determining a first group of terminal devices, where the first group of terminal devices are connected to the at least one access network device and can be configured to perform the sensing process, and the second indication information is sent based on determining that a quantity of first group of terminal devices is less than a threshold quantity. In this manner, when a quantity of terminal devices in a connected state is insufficient, a terminal device in an idle state or an inactive state may be selected to participate in the sensing process.

In some embodiments, the second indication information is used to request at least one of the following: sensing capability information of a terminal device in an idle state or an inactive state, or information related to a location of the terminal device. The sensing capability requirement includes at least one of the following: a sensing type, a sensing range, a sensing resolution, or a sensing accuracy, and the response message for the second indication information includes at least one of the following: the sensing capability information, the information related to the location of the terminal device, or an indication of at least one access network device. In this manner, the terminal device in an idle state or an inactive state can participate in the sensing process.

In some embodiments, the method further includes: determining, based on the sensing capability information, at least one terminal device configured to perform the sensing process, where the at least one terminal device is associated with the at least one access network device; and sending an indication of the at least one terminal device. In this manner, the terminal device in an idle state or an inactive state can participate in the sensing process.

In some embodiments, the method further includes: determining the at least one access network device configured to perform the sensing process, where the second request message is used by the at least one access network device to determine the terminal device configured to perform the sensing process. In this manner, the access network device may select a terminal device in an idle state or an inactive state to participate in the sensing process.

According to a fourth aspect, an embodiment of this disclosure provides a communication apparatus. The communication apparatus is configured to perform a unit or a module in the method according to any one of the first aspect, the second aspect, the third aspect, or embodiments of the first aspect, the second aspect, or the third aspect.

According to a fifth aspect, an embodiment of this disclosure provides a communication apparatus. The communication apparatus includes a processor, and the processor is configured to perform the method according to any one of the first aspect, the second aspect, the third aspect, or embodiments of the first aspect, the second aspect, or the third aspect.

In some embodiments, the communication apparatus further includes a memory, and the memory is coupled to the processor.

According to a sixth aspect, an embodiment of this disclosure provides a computer-readable storage medium. The computer-readable storage medium stores instructions. When the instructions are executed by an apparatus, the apparatus is enabled to perform the method according to any one of the first aspect, the second aspect, the third aspect, or embodiments of the first aspect, the second aspect, or the third aspect.

According to a seventh aspect, an embodiment of this disclosure provides a computer program product, where the computer program product includes instructions, and when the instructions are executed by an apparatus, the apparatus is enabled to perform the method according to any one of the first aspect, the second aspect, the third aspect, or embodiments of the first aspect, the second aspect, or the third aspect.

According to an eighth aspect, an embodiment of this disclosure provides a communication system. The communication system includes the communication apparatus configured to perform the method according to any one of the first aspect or embodiments of the first aspect, and the communication apparatus configured to perform the method according to any one of the second aspect or embodiments of the second aspect.

In some embodiments, the communication system further includes the communication apparatus configured to perform the method according to any one of the third aspect or embodiments of the third aspect.

### BRIEF DESCRIPTION OF DRAWINGS

With reference to the accompanying drawings and the following detailed descriptions, the foregoing and other features, advantages, and aspects of embodiments of this disclosure become more apparent. Several implementations of this application are shown herein by way of an example but not a limitation. In the accompanying drawings:
FIG. 1A and FIG. 1B are diagrams of different scenarios to which some embodiments of this disclosure may be applied;
FIG. 1C is a diagram of a sensing process in which some embodiments of this disclosure may be applied;
FIG. 2 is a signaling diagram of a communication process according to some embodiments of this disclosure;
FIG. 3A to FIG. 3D are signaling diagrams of communication processes of terminal device selection based on a core network device according to some embodiments of this disclosure;
FIG. 4A-1 to FIG. 4C are signaling diagrams of communication processes of terminal device selection based on an access network device according to some embodiments of this disclosure.
FIG. 5A and FIG. 5B are signaling diagrams of communication processes of reporting sensing measurement data according to some embodiments of this disclosure;
FIG. 6 is a schematic flowchart of a method implemented at a terminal device according to some embodiments of this disclosure;
FIG. 7 is a schematic flowchart of a method implemented at an access network device according to some embodiments of this disclosure;
FIG. 8 is a schematic flowchart of a method implemented at a core network device according to some embodiments of this disclosure;
FIG. 9 is a diagram of main composition of an example device in a possible implementation according to an embodiment of this disclosure; and
FIG. 10 is a simplified block diagram of an example device in a possible implementation according to an embodiment of this disclosure.
In the accompanying drawings, same or similar reference numerals indicate same or similar elements.

### DESCRIPTION OF EMBODIMENTS

Embodiments of this disclosure are described in more detail in the following with reference to the accompanying drawings. Although some embodiments of this disclosure are shown in the accompanying drawings, it should be understood that this disclosure can be implemented in various forms, and should not be construed as being limited to embodiments described herein, and instead, these embodiments are provided for a more thorough and complete understanding of this disclosure. It should be understood that the accompanying drawings and embodiments of this disclosure are merely used as examples and are not intended to limit the protection scope of this disclosure.

In the descriptions of embodiments of this disclosure, the term "including" and similar terms thereof shall be understood as non-exclusive inclusions, that is, "including but not limited to". The term "based on" should be understood as "at least partially based on". The term "one embodiment" or "this embodiment" should be understood as "at least one embodiment". The terms "first", "second", and the like may indicate different objects or a same object. The term "and/or" indicates at least one of two items associated with the term. For example, "A and/or B" indicates A, B, or A and B. The following may further include other explicit and implied definitions.

Embodiments of this disclosure may be applied to a 4th generation (4th generation, 4G) communication system, for example, a long term evolution (long term evolution, LTE) communication system, or may be applied to a 5th generation (5th generation, 5G) communication system, for example, a 5G new radio (new radio, NR) communication system, or may be applied to various communication systems evolved after 5G, for example, a 6th generation (6th generation, 6G) communication system. Embodiments of this disclosure may also be applied to a Bluetooth system, a wireless-fidelity (wireless-fidelity, Wi-Fi) system, a long range radio (long range radio, LoRa) system, or an internet of vehicles system. Embodiments of this disclosure may be further applied to a satellite communication system, and the satellite communication system may be integrated with the foregoing communication system.

In this disclosure, the term "core network device" or "core network element" may be a functional block located in a next generation core network (next generation core network, NGC). The NGC may include but is not limited to any one of the following: an access and mobility management function (access and mobility management function, AMF), a user plane function (user plane function, UPF), a gateway mobile location center (gateway mobile location center, GMLC), user data management (user data management, UDM), a location management function (location management function, LMF), and a location retrieval function (location retrieval function, LRF). The AMF mainly performs a function like mobility management, or access authentication/authorization. In addition, the AMF may receive non-access stratum (non-access stratum, NAS) signaling of a terminal device and related signaling of an access network device (for example, next generation (next generation, NG) 2 interface signaling at a base station granularity that interacts with the AMF). The NGC may further include a unit or module configured to perform a sensing process (for example, initiating a sensing task, determining a sensing configuration, and evaluating sensing measurement data).

In this disclosure, the term "access network device" is a network side entity or node that can be used to communicate with the terminal device, for example, may be an access network device. The access network device may be an apparatus deployed in a radio access network to provide a wireless communication function for a mobile terminal. For example, the access network device may be a base station (base station, BS), an evolved NodeB (evolved NodeB, eNodeB), a next generation NodeB (next generation NodeB, gNB) in a 5G mobile communication system, a transmission reception point (transmission reception point, TRP), a base station evolved from the 3GPP, an access node in a Wi-Fi system, a wireless relay node, a wireless backhaul node, or the like. Alternatively, the access network device may be an access network device in a communication network of an open access network (open RAN, O-RAN or ORAN), a cloud radio access network (cloud radio access network, CRAN), or two or more of the foregoing networks. The access network device may include one or more co-site or non-co-site transmission reception points. In some deployments of the access network device, the access network device may include a central unit (central unit, CU), a distributed unit (distributed unit, DU), or a CU and a DU. In some other deployments of the access network device, the CU may be further split into a CU-control plane (control plane, CP), a CU-user plane (user plane, UP), and the like. In some other deployments of the access device, the access network device may also be a module or unit that completes some functions of the base station, for example, may be a central unit (central unit, CU), may be a distributed unit (distributed unit, DU), or may be a radio unit (radio unit, RU). The CU herein completes functions of a radio resource control protocol and a packet data convergence protocol (packet data convergence protocol, PDCP) of the base station, and may further complete functions of a service data adaptation protocol (service data adaptation protocol, SDAP). The DU completes functions of a radio link control layer and a medium access control (medium access control, MAC) layer of the base station, and may further complete a part or all of functions of a physical layer. For specific descriptions of the foregoing protocol layers, refer to technical specifications related to the 3rd generation partnership project (3rd generation partnership project, 3GPP). The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). In different systems, the CU, the DU, or the RU may alternatively have different names, but a person skilled in the art may understand meanings thereof. For example, in an ORAN system, a CU may also be referred to as an O-CU (open CU), a DU may also be referred to as an O-DU, and an RU may also be referred to as an O-RU. Any one of the CU (or a CU-CP and a CU-UP), the DU, and the RU in this application may be implemented by using a software module, a hardware module, or a combination of a software module and a hardware module. The ORAN architecture includes a near-real time radio access network intelligence controller (near-real time RAN intelligence controller, near-RT RIC), a CU, and a DU. The DU implements functions of a physical (physical, PHY) layer, a media access control (media access control, MAC) layer, and a radio link control (radio link control, RLC) layer, the CU implements functions of a radio resource control (radio resource control, RRC) layer and a packet data convergence protocol (packet data convergence protocol, PDCP) layer, and the near-real time RIC implements a function of an application layer (app layer). In an O-RAN architecture, an AI function is implemented in the near-real time RIC. The near-real time RIC may include functions such as radio connection management, mobility management, QoS management, interference management, and an artificial intelligence training model. The CU and the DU may be connected through an F1 interface, and the near-real time RIC and the CU may be connected through an E2 interface. A specific deployment manner of the access network device is not limited in this application. Some functions of the radio access network device may be implemented by using a plurality of network function entities. These network function entities may be network elements in hardware devices, or may software functions run on dedicated hardware, or may be instantiated virtualization functions on a platform (for example, a cloud platform). For another example, in a vehicle-to-everything (vehicle-to-everything, V2X) technology, the access network device may be a road side unit (road side unit, RSU). A plurality of access network devices in a communication system may be base stations of a same type, or may be base stations of different types. The base station may communicate with the terminal device, or may communicate with the terminal device via a relay station. The access network device in this disclosure may alternatively be a device having a sensing function. The device may transmit a sensing signal, or receive and process a reflected signal of a target in an environment. In embodiments of this disclosure, a communication apparatus configured to implement a function of the access network device may be the access network device, or may be an access network device having some functions of the base station, or may be an apparatus that can support the access network device in implementing the function, for example, a chip system. The apparatus may be mounted in the access network device.

In this disclosure, the term "terminal device" refers to a user-side device having a wireless transceiver function, which may be a fixed device, a mobile device, a handheld device (for example, a mobile phone), a wearable device, a vehicle-mounted device, or a wireless apparatus (for example, a communication module, a modem, or a system on chip) built into the foregoing device. The terminal device is configured to connect a person, an object, a machine, and the like, and may be widely used in various scenarios, for example, cellular communication, device-to-device (device-to-device, D2D) communication, V2X communication, machine-to-machine/machine-type communication (machine-to-machine/machine-type communication, M2M/MTC), the internet of things (Internet of Things, IoT), virtual reality (virtual reality, VR), augmented reality (augmented reality, AR), industrial control (industrial control), self-driving (self-driving), remote medical (remote medical), smart grid (smart grid), smart furniture, smart office, smart wearable, smart transportation, smart city (smart city), drone, robot, and the like. For example, the terminal device may be a handheld terminal in cellular communication, a communication device in D2D, an internet of things device in MTC, a surveillance camera in smart transportation and a smart city, or a communication device in an uncrewed aerial vehicle. The terminal device may be sometimes referred to as a user equipment (user equipment, UE), a user terminal, a user apparatus, a subscriber unit, a subscriber station, a terminal, an access terminal, an access station, a UE station, a remote station, a mobile device, a wireless communication device, or the like.

In this disclosure, the term "target" may be various tangible objects that can reflect an electromagnetic wave in an environment, for example, a ground object such as a mountain, a forest, or a building, or may include a movable object such as a vehicle, an uncrewed aerial vehicle, a pedestrian, or a terminal device. The target may also be referred to as a sensed target, a detected target, a sensed object, a detected object, a sensed device, or the like. This is not limited in embodiments of this application.

In this disclosure, the term "sensing" means detecting parameters of a target in a physical environment, for example, a location of the target or a speed of the target. It may be understood that a radar detection system detects a target by transmitting an electromagnetic wave and analyzing a reflected signal reflected by an object. The sensing may also be referred to as detection.

In this disclosure, the term "sensing signal" refers to a signal for sensing (or detecting) a sensed target (or referred to as a target object). The sensing signal is also referred to as a detection signal, a linear frequency modulation signal, a radar signal, a radar sensing signal, a radar detection signal, an environment sensing signal, or the like. The sensing signal may be a pulse signal, or may be a signal in a wireless communication system.

In this disclosure, the term "communication signal" refers to a signal transmitted between communication devices for communication, for example, includes a signal transmitted between a network device and a terminal device. The communication signal may be, for example, a signal carried on a physical downlink shared channel (physical downlink shared channel, PDSCH).

In this disclosure, the term "downlink" refers to transmission from a network device to a terminal device.

In this disclosure, the term "uplink" refers to transmission from a terminal device to a network device.

For a sensing mode in which a terminal device participates, selection of a terminal device that has a sensing capability is an important technical step for implementing a wireless sensing procedure. When selecting the terminal device that has the sensing capability, a connection status of the terminal device may need to be considered. Generally, a terminal device that is in a connected state and has a sensing capability is selected to participate in a sensing process. However, when the terminal device in the connected state cannot meet a sensing measurement requirement, there is a high probability that a sensing task fails to be executed.

Some embodiments of this disclosure provide a method for selecting a terminal device that participates in a sensing process, to support in determining whether a terminal device in an idle state or an inactive state meets a sensing capability requirement, and respond in a case in which the sensing capability requirement is met. This helps a network device select a terminal device that is in an idle state or an inactive state and that meets the sensing capability requirement to participate in the sensing process. In this way, a success rate of the sensing task can be improved, and poor sensing performance caused by an insufficient quantity of terminal devices in the connected state is avoided.

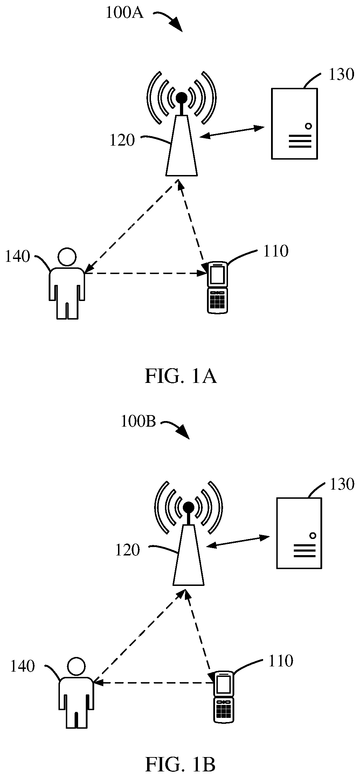

FIG. 1A is a diagram of a scenario 100A to which some embodiments of this disclosure may be applied. The scenario A may involve a terminal device 110 and an access network device 120. The terminal device 110 may be an entity configured to receive or transmit a communication signal and a sensing signal, and mainly implements a function of performing wireless communication and wireless sensing with the access network device 120. The access network device 120 may be an entity that is on a network side and that is configured to transmit or receive a communication signal and a sensing signal, and mainly implements a function of performing wireless communication and wireless sensing with the terminal device 110. In some cases, the scenario A may also involve a core network device 130. The core network device 130 may include, for example, a sensing function network element or an AMF. The core network device 130 may communicate with the access network device 120 or communicate with the terminal device 110 by using the access network device 120.

In the scenario 100A, the access network device 120 transmits a sensing signal, the sensing signal is reflected when encountering a target 140 in an environment, and the terminal device 110 receives the reflected signal, and further senses information such as a location and a speed of the target 140. It should be noted that, when the access network device 120 sends the sensing signal for sensing, the sensing signal carries communication data or a communication reference signal sequence to be transmitted by the access network device 120 to the terminal device 110. In FIG. 1A, the target 140 in the environment is different from the terminal device 110.

In some cases, a sensing process may be initiated by the terminal device 110 or another terminal device. The core network device 130 may assist in performing the sensing process. In some cases, the sensing process may be initiated by the core network device 130, and the core network device 130 may provide a configuration related to the sensing process and receive a result of sensing measurement.

FIG. 1B is a diagram of a scenario 100B to which some embodiments of this disclosure may be applied. In the scenario 100B, the terminal device 110 transmits a sensing signal, and the sensing signal is reflected when encountering a target 140 in an environment. In addition, the access network device 120 receives the reflected signal, to sense information such as a location and a speed of the target 140. It should be noted that, when the terminal device 110 sends the sensing signal for sensing, the sensing signal carries communication data or a communication reference signal sequence to be transmitted by the terminal device 110 to the access network device 120. In some cases, a sensing process may be initiated by the terminal device 110 or another terminal device. The core network device 130 may assist in performing the sensing process. In some cases, the sensing process may be initiated by the core network device 130, and the core network device 130 may provide a configuration related to the sensing process and receive a result of sensing measurement.

It should be understood that the scenarios, a quantity of devices, and connections between the devices shown in FIG. 1A and FIG. 1B are merely for description purposes, and do not imply any limitation. Embodiments of this disclosure may also be applied to other possible scenarios, provided that there is sending and receiving of the sensing signal and there is a terminal device that participates in a sensing process in the scenario. For example, embodiments of this disclosure may be further applied to a "terminal device self-transmit-and-receive" scenario, that is, a device that sends the sensing signal and a device that receives a reflected signal that is of the sensing signal and that is reflected by a target in an environment are a same terminal device. In another example, embodiments of this disclosure may be further applied to a "terminal device A-to-terminal device B" scenario, that is, a device that sends the sensing signal and a device that receives a reflected signal that is of the sensing signal and that is reflected by a target in an environment are different terminal devices. Embodiments of this disclosure may also be applied to a 5G NR system or another communication system, provided that the communication system has an entity capable of sending a sensing signal and an entity capable of receiving the sensing signal.

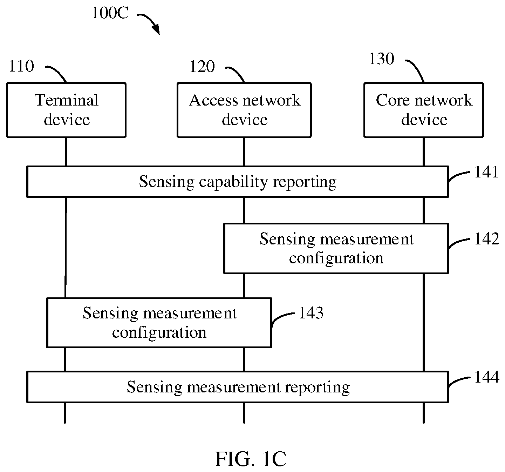

FIG. 1C is a diagram of a sensing process 100C in which some embodiments of this disclosure may be applied. The sensing process 110C may be applied to the scenarios shown in FIG. 1A and FIG. 1B or other possible scenarios. For ease of understanding, FIG. 1C is described with reference to FIG. 1A and FIG. 1B. For example, the sensing process 100C may involve the access network device 120, the terminal device 110, and the core network device 130.

The sensing process 110C may be initiated by the core network device 130 or the serving terminal device 110. The sensing process usually includes three steps: sensing capability reporting, sensing measurement configuration, and sensing measurement reporting.

In the sensing process 110C, a sensing capability reporting step 141 may be first performed, to report, to the core network device 130 and/or the access network device 120, a sensing mode supported by the terminal device 110 and/or the access network device 120 and a capability related to sensing signal processing, so as to help the core network device 130/the access network device 120 determine to use an appropriate sensing mode and sensing resource.

Subsequently, sensing measurement configuration steps 142 and 143 may be performed, so that after the terminal device 110 and the access network device 120 receive a sensing requirement sent by the core network device 130, sensing resource allocation may be determined based on the sensing requirement. In the sensing measurement configuration step, the access network device 120 is responsible for allocating an air interface resource as a network element that needs to participate in a sensing process. Therefore, the procedure exists in an interaction process between the core network device 130 and the access network device 120, and between the access network device 120 and the terminal device 110.

After sensing measurement is performed, a sensing measurement reporting step 144 may be performed, to report, to the core network device 130 or the serving terminal device 110, a sensing measurement result collected by the terminal device 110 and/or the access network device 120. In different sensing modes, a network element that reports a sensing measurement result may be the terminal device 110 or the access network device 120.

It should be understood that the sensing process shown in FIG. 1C is merely for description purposes, and does not imply any limitation. Embodiments of this disclosure may also be applied to other possible sensing processes.

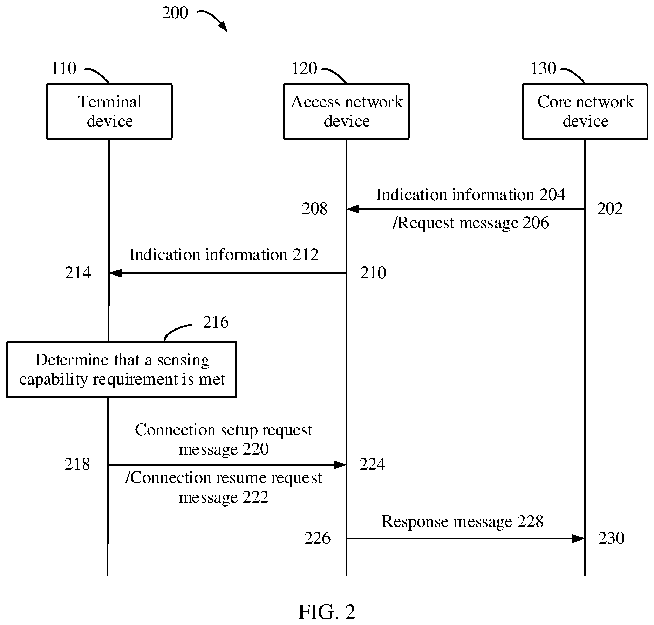

FIG. 2 is a signaling diagram of a communication process 200 according to some embodiments of this disclosure. The communication process 200 may be applied to the scenarios shown in FIG. 1A and FIG. 1B or other possible scenarios. The communication process 200 may be applied to the sensing process shown in FIG. 1C or another possible sensing process. For ease of understanding, FIG. 2 is described with reference to FIG. 1A and FIG. 1B. For example, the communication process 200 may involve the access network device 120, the terminal device 110, and the core network device 130. It should be understood that the communication process 200 may further include additional blocks not shown and/or omit some of the blocks shown, and that the scope of this disclosure is not limited thereto.

As shown in FIG. 2, the core network device 130 sends 202 indication information 204 or a request message 206 to the access network device 120. The indication information 204 indicates a sensing capability requirement. The request message 206 is used by at least one access network device to determine a terminal device configured to perform a sensing process. The at least one access network device may include one or more access network devices. For ease of understanding, in the following, the access network device 120 is used as an example to describe a step or signaling related to the at least one access network device in the communication process 200.

The access network device 120 receives 208 indication information 204 or a request message 206 from the core network device 130, and sends 210, to the terminal device 110 in an idle state or an inactive state, indication information 212 indicating a sensing capability requirement. The indication information 212 is determined based on the received indication information 204 or the request message 206. It may be understood that the access network device 120 may send the indication information 212 to a plurality of terminal devices in an idle state or an inactive state. For ease of understanding, the following uses the terminal device 110 as an example to describe a step or signaling related to the terminal device in an idle state or an inactive state in the communication process 200.

The terminal device 110 in the idle state or the inactive state receives 214 the indication information 212 indicating the sensing capability requirement. Based on the indication information 212, the terminal device 110 in the idle state or the inactive state determines 216 whether the terminal device 110 meets the sensing capability requirement. If the terminal device 110 in the idle state or the inactive state meets the sensing capability requirement, the terminal device 110 initiates connection setup or connection resumption. For example, the terminal device 110 may send 218 a connection setup request message 220 or a connection resume request message 222 to the access network device 120.

In an example, if the terminal device 110 is in an idle state, when the terminal device 110 meets the sensing capability requirement, the terminal device 110 may send 218 a connection setup request message 220 (for example, an RRCSetupRequest message) to the access network device 120. As a response to the connection setup request message 220, the access network device 120 may send a connection setup message (for example, an RRCSetup message) to the terminal device 110. As a response to the connection setup message, the terminal device 110 may send a connection setup complete message (for example, an RRCSetupComplete message) to the access network device 120. In this way, the terminal device 110 may transition from the idle state to a connected state.

In another example, if the terminal device 110 is in an inactive state, when the terminal device 110 meets the sensing capability requirement, the terminal device 110 may send 218 a connection resume request message 222 (for example, an RRCResumeRequest message) to the access network device 120. As a response to the connection resume request message 220, the access network device 120 may send a connection resume message (for example, an RRCResume message) to the terminal device 110. As a response to the connection resume message, the terminal device 110 may send a connection resume complete message (for example, an RRCResumeComplete message) to the access network device 120. In this way, the terminal device 110 may transition from the inactive state to the connected state.

The access network device 120 receives 224 the connection setup request message 220 or the connection resume request message 222 from the terminal device 110. The access network device 120 may send 226, to the core network device 130, a response message 228 for the indication information 204 or the request message 206. Correspondingly, the core network device 130 receives 230, from the access network device 120, the response message 228 for the indication information 204 or the request message 206.

In some embodiments, the core network device 130 may determine at least one access network device configured to perform a sensing process. The core network device 130 may determine a first group of terminal devices, where the first group of terminal devices are connected to the at least one access network device and can be configured to perform the sensing process. If a quantity of first group terminal devices is less than a threshold quantity, the core network device 130 sends the indication information 204 to the determined at least one access network device configured to perform the sensing process, so that the at least one access network device determines the terminal device configured to perform the sensing process. The indication information 204 is used to request at least one of the following: sensing capability information of a terminal device in an idle state or an inactive state, or information related to a location of the terminal device in the idle state or the inactive state.

The access network device 120 determines the indication information 212 based on the indication information 204 received from the core network device 130. In some examples, the sensing capability requirement indicated by the indication information 204 may include at least one of the following: a sensing type, a sensing range, a sensing resolution, or a sensing accuracy. Correspondingly, the sensing capability requirement indicated by the indication information 212 may include at least one of the following: a sensing type, a sensing range, a sensing resolution, or a sensing accuracy. In some embodiments, the indication information 212 may be information that is the same as the indication information 204. In another example, the indication information 212 may be information generated based on the indication information 204.

In some examples, the indication information 212 indicating the sensing capability requirement may be included in a paging message. In other words, the access network device 120 may send the indication information 212 to the terminal device in the idle state or the inactive state by using the paging message. If the sensing capability requirement indicated by the indication information 212 is met, the terminal device 110 initiates connection setup or connection resumption. In this way, the terminal device 110 may transition from the idle state or the inactive state to the connected state. In some example implementations, the access network device 120 may send the indication information 212 to the terminal device 110 by using a unicast paging message. For example, an indication of the terminal device 110 may be used as an identifier of the unicast paging message, and the unicast paging message may include the indication of the terminal device 110 and the indication information 212 indicating the sensing capability requirement. In another example implementation, the access network device 120 may send the indication information 212 to the terminal device in the idle state or the inactive state by using a multicast paging message. For example, as an identifier of the multicast paging message, the multicast paging message may include the indication information 212 indicating the sensing capability requirement, for example, a sensing type or an identifier of a sensing mode.

In some embodiments, in response to receiving the connection setup message or the connection resume message, the terminal device 110 may send sensing capability information of the terminal device 110 to the access network device 120. In an example, the sensing capability information may be included in a connection setup complete message or a connection resume complete message. In another example, the sensing capability information may be included in a message different from the connection setup complete message or the connection resume complete message.

In some embodiments, when the terminal device 110 meets the sensing capability requirement and initiates connection setup or connection resumption, the access network device 120 may send, to the terminal device 110, a request message used to request the sensing capability information. The terminal device 110 may send the sensing capability information to the access network device 120 in response to receiving the request message used to request the sensing capability information.

The access network device 120 may send the sensing capability information of the terminal device 110 to the core network device 130. The sensing capability information of the terminal device 110 may be included in the response message 228 for the indication information 204. In some examples, the response message 228 for the indication information 204 may further include an indication of the access network device 120.

In some embodiments, the terminal device 110 may further send, to the access network device 120, information related to a location of the terminal device 110. Correspondingly, the access network device 120 may send the information related to the location of the terminal device 110 to the core network device 130. The response message 228 for the indication information 204 may further include the information related to the location of the terminal device 110.

As the response message 228 for the indication information 204, the core network device 130 may receive sensing capability information of a terminal device that is in an idle state or an inactive state and that meets a sensing capability requirement from the at least one access network device. In this way, the core network device 130 may determine at least one terminal device associated with the at least one access network device, to perform the sensing process. In an example, the determined at least one terminal device configured to perform the sensing process may include the terminal device 110.

In some embodiments, the core network device 130 may send, to the at least one access network device configured to perform the sensing process, an indication of the at least one terminal device configured to perform the sensing process. In an example, the core network device 130 may send, to the access network device 120, an indication of a terminal device that is in the at least one terminal device configured to perform the sensing process and that is associated with the access network device 120. The access network device 120 may send, to the terminal device that is associated with the access network device 120 and that is used to perform the sensing process, configuration information related to the sensing process. For example, the configuration information is as follows.

For example, the terminal device 110 may receive, from the access network device 120, configuration information related to the sensing process, and perform the sensing process. In an example, the terminal device 110 may maintain the connected state to perform the sensing process. In another example, the terminal device 110 may return to the idle state or the inactive state to perform the sensing process. For example, the terminal device 110 may receive state transition information from the access network device 120, where the state transition information indicates the terminal device 110 to transition from the connected state to the idle state or the inactive state. For example, the state transition information may be indicated by using a connection release message (for example, an RRCRelease message or an RRCRelease message with a suspend configuration (RRCRelease with suspend configuration)). The configuration information related to the sensing process may be included in the connection release message. Alternatively, the configuration information related to the sensing process may be included in another message, for example, a system information block (system information block, SIB). The configuration information related to the sensing process may include a time-frequency domain resource used to send and receive a sensing signal. In some embodiments, the core network device 130 may determine whether the terminal device 110 keeps a current connected state to perform the sensing process or restores to an idle state or an inactive state to perform the sensing process.

In some embodiments, the core network device 130 may determine at least one access network device configured to perform the sensing process, and send the request message 206 to the determined at least one access network device configured to perform the sensing process. Based on the request message 206, the access network device 120 may determine a first group of terminal devices that are connected to the access network device 120 and that can be configured to perform the sensing process. If a quantity of first group of terminal devices is less than a threshold quantity, the access network device 120 may send the indication information 212 to a terminal device in an idle state or an inactive state. The sensing capability requirement indicated by the indication information 212 may include at least one of the following: a sensing type, a sensing range, a sensing resolution, or a sensing accuracy. In some examples, the indication information 212 may be determined based on the request message 206. In another example, the indication information 212 may be determined by the access network device 120 based on the first group of terminal devices and the sensing process to be performed.

In some examples, the indication information 212 may be included in a paging message. In other words, the access network device 120 may send the indication information 212 to the terminal device in the idle state or the inactive state by using the paging message. In some example implementations, the access network device 120 may send the indication information 212 to the terminal device 110 by using a unicast paging message. For example, an indication of the terminal device 110 may be used as an identifier of the unicast paging message, and the unicast paging message may include the indication of the terminal device 110 and the indication information 212 indicating the sensing capability requirement. In another example implementation, the access network device 120 may send the indication information 212 to the terminal device in the idle state or the inactive state by using a multicast paging message. For example, the multicast paging message may include the indication information 212 indicating the sensing capability requirement, as an identifier of the multicast paging message.

If the sensing capability requirement indicated by the indication information 212 is met, the terminal device 110 initiates connection setup or connection resumption. For example, in response to receiving the connection setup message or the connection resume message, the terminal device 110 may send sensing capability information of the terminal device 110 to the access network device 120. In an example, the sensing capability information may be included in a connection setup complete message or a connection resume complete message. In another example, the sensing capability information may be included in a message different from the connection setup complete message or the connection resume complete message.

In some embodiments, when the terminal device 110 meets the sensing capability requirement and initiates connection setup or connection resumption, the access network device 120 may send, to the terminal device 110, a request message used to request the sensing capability information. The terminal device 110 may send the sensing capability information to the access network device 120 in response to receiving the request message used to request the sensing capability information.

The access network device 120 may send the sensing capability information of the terminal device 110 to the core network device 130. The sensing capability information of the terminal device 110 may be included in the response message 228 for the indication information 204. In some examples, the response message 228 for the indication information 204 may further include an indication of the access network device 120. Based on the sensing capability information of the terminal device that is in the idle state or the inactive state and that meets the sensing capability requirement, the access network device 120 may determine at least one terminal device configured to perform the sensing process, and send the response message 228 for the request message 206 to the core network device 130. The access network device 120 may send, to the terminal device that is associated with the access network device 120 and that is used to perform the sensing process, configuration information related to the sensing process.

For example, the terminal device 110 may receive, from the access network device 120, configuration information related to the sensing process, and perform the sensing process. In an example, the terminal device 110 may maintain the connected state to perform the sensing process. In another example, the terminal device 110 may return to the idle state or the inactive state to perform the sensing process. For example, the terminal device 110 may receive state transition information from the access network device 120, where the state transition information indicates the terminal device 110 to transition from the connected state to the idle state or the inactive state. For example, the state transition information may be indicated by using a connection release message. The configuration information related to the sensing process may be included in the connection release message. Alternatively, the configuration information related to the sensing process may be included in another message (for example, a SIB).

In this way, if a quantity of connected-state terminal devices that have sensing capabilities is insufficient to support execution of the sensing process, a terminal device in an idle state or an inactive state may be selected to participate in the sensing process. No RRC connection needs to be established in a sensing measurement process, and the terminal device in the idle state or the inactive state may also perform sensing measurement. If a terminal device in an idle state or an inactive state is selected to participate in the sensing process, the terminal device may perform the sensing process in a connected state, an idle state, or an inactive state. After sensing measurement configuration is completed for the terminal device, terminal devices selected to perform sensing measurement in the idle state or the inactive state need to be determined. Maintaining the terminal device in the idle state or the inactive state to perform sensing measurement can reduce network connection pressure.

Sensing measurement needs to be performed in the sensing process, that is, a feature of a target in an environment is extracted based on a reflected signal. In a sensing scenario (for example, the scenario 100A shown in FIG. 1A) in which the terminal device receives the reflected signal, after obtaining a measurement result, the terminal device needs to report the sensing measurement result. In some sensing scenarios, the sensing measurement result needs to be calculated on a terminal device side, resulting in heavy computing pressure on the terminal device. If the sensing measurement result is reported after each sensing measurement, a large amount of sensing measurement data needs to be reported. Some embodiments of this disclosure relate to a solution related to reporting of the sensing measurement data. In some embodiments, the solution related to reporting of the sensing measurement data may be performed after the communication process 200. That is, a terminal device selected by using the communication process 200 may report the sensing measurement data by using the solution related to reporting of the sensing measurement data according to some embodiments of this disclosure. In another embodiment, the solution related to reporting of the sensing measurement data may be performed independently from the communication process 200. That is, the solution related to reporting of the sensing measurement data according to some embodiments of this disclosure may be applied to a terminal device selection process different from the communication process 200.

In some embodiments, the core network device 130 may send sensing reporting configuration information to the access network device 120 used to perform the sensing process. The sensing reporting configuration information indicating a condition of reporting sensing measurement data of the sensing process by the at least one terminal device configured to perform the sensing process, and the condition is associated with channel state information (channel state information, CSI). For example, the sensing reporting configuration information may include a threshold, and the condition includes that a change amount of the CSI is greater than the threshold. The access network device 120 may send sensing reporting configuration information to the terminal device. The sensing reporting configuration information sent to the terminal device may be the same as the sensing reporting configuration information sent by the core network device 130 to the access network device 120, or may be generated based on the sensing reporting configuration information sent by the core network device 130 to the access network device 120.

The terminal device may perform a sensing process, to obtain the CSI. When the CSI meets a condition indicated in the sensing reporting configuration information, sensing measurement data of the sensing process is sent to the access network device. For example, when a change amount of the CSI is greater than a threshold, the terminal device may report the sensing measurement data of the sensing process to the access network device 120. The access network device 120 may forward the sensing measurement data to the core network device 130.

In this manner, a CSI change threshold is configured for the terminal device, so that the terminal device reports the sensing measurement data when a CSI change value obtained through measurement is greater than the CSI change threshold. This can reduce a data amount to be reported and computing pressure of the terminal device.

In some embodiments, the core network device 130 may send CSI reporting configuration information and sensing reporting configuration information to the access network device 120 used to perform the sensing process. The CSI reporting configuration information is used to configure the at least one terminal device configured to perform the sensing process to report CSI information related to CSI, and the sensing reporting configuration information indicating a condition of reporting sensing measurement data of the sensing process by the at least one terminal device, where the condition is associated with CSI. For example, the CSI reporting configuration information may include a reporting periodicity, the CSI information may include a change amount of the CSI, the sensing reporting configuration information may include a threshold, and the condition may include that the change amount of the CSI is greater than the threshold. The terminal device may perform a sensing process, to obtain the CSI. The terminal device may send the CSI information to the access network device 120 based on the CSI reporting configuration information (for example, a reporting periodicity). The access network device 120 may determine, based on the sensing reporting configuration information, whether the CSI information received from the terminal device meets the condition of reporting the sensing measurement data in the sensing process. If the CSI information does not meet the condition of reporting the sensing measurement data of the sensing process, the access network device 120 may send a request message to the terminal device to request the sensing measurement data of the sensing process. Based on the request message, the terminal device may send the sensing measurement data of the sensing process to the access network device 120.

In this manner, the CSI reporting periodicity is configured for the terminal device, so that the terminal device periodically reports a sensing CSI change value, and the access network device (for example, a base station) can select a user terminal device whose sensing CSI change value is greater than a CSI change threshold to report the sensing measurement data. In this way, a reported data amount and computing pressure of the terminal device can be reduced.

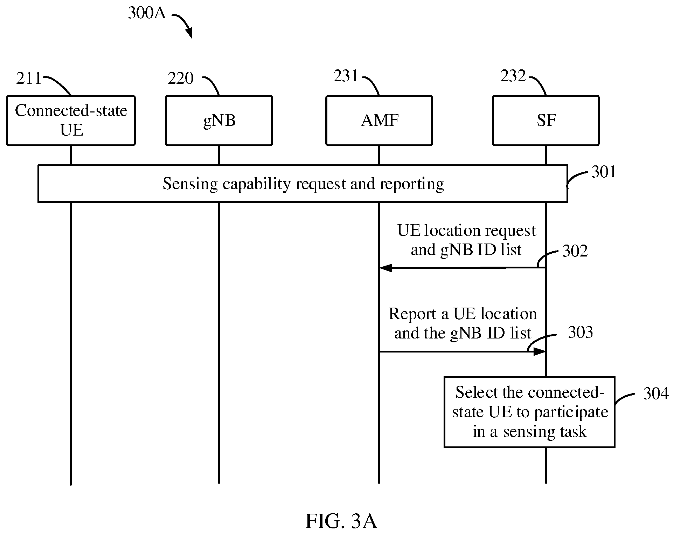

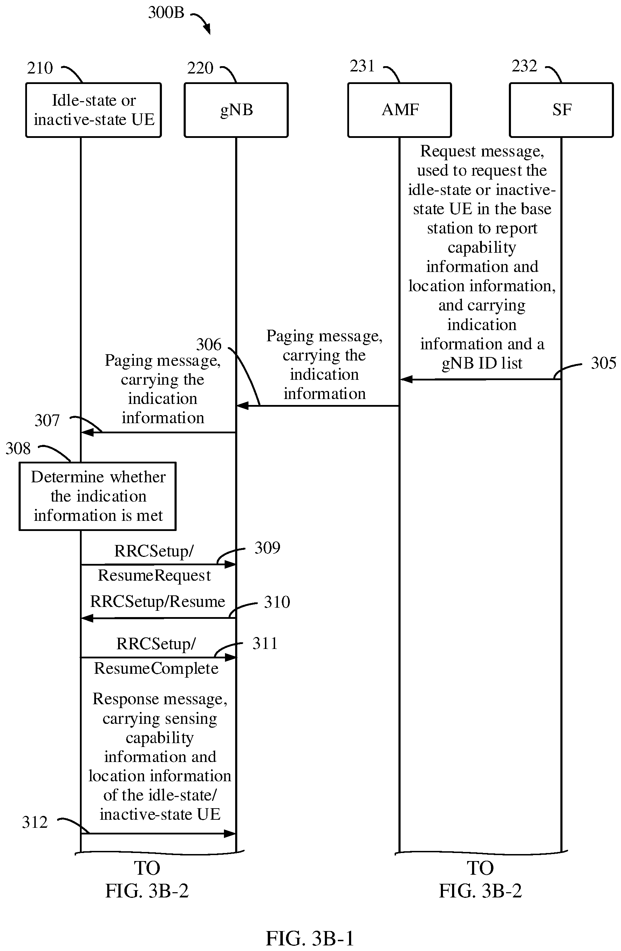

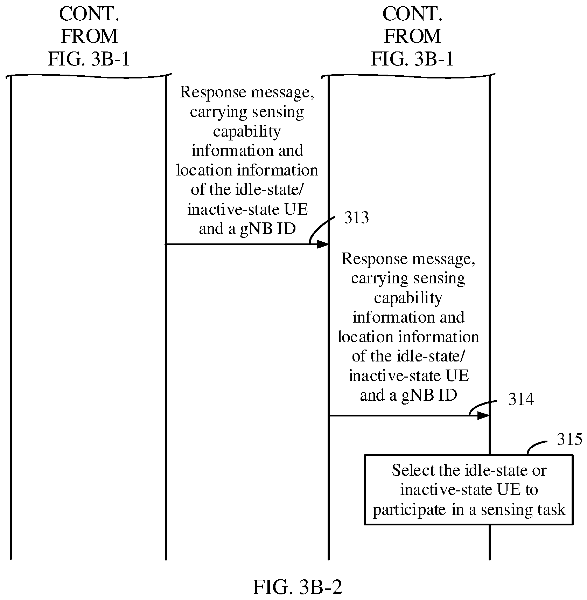

FIG. 3A to FIG. 3D are signaling diagrams of communication processes 300A to 300D of terminal device selection based on a core network device according to some embodiments of this disclosure. The communication processes 300A to 300D may be applied to the scenarios shown in FIG. 1A and FIG. 1B or other possible scenarios. For a purpose of illustration, FIG. 3A to FIG. 3D are described with reference to FIG. 1A and FIG. 1B, and the communication processes 300A to 300D may involve accessing a connected-state UE 211, an idle-state or inactive-state UE 210, a gNB 220, an AMF 231, and a sensing function (sensing function, SF) 232. The connected-state UE 211 and the idle-state or inactive-state UE 210 may be specific examples of the terminal device 110 in FIG. 1A and FIG. 1B, and are configured to receive or transmit a communication signal and a sensing signal, to implement a function of performing wireless communication and wireless sensing with the gNB 220. The gNB 220 may be a specific example of the access network device 120 in FIG. 1A and FIG. 1B. The AMF 231 and the SF 232 may be a part of the core network device 130 in FIG. 1A and FIG. 1B. The SF 232 is a core network element configured to implement a sensing function. It should be understood that the SF 232 is merely an example, and is not intended to be limited. Alternatively, the SF 232 may be implemented by another core network element. The communication processes 300A to 300D may be considered as specific examples of the communication process 200 shown in FIG. 2. It should be understood that the communication processes 300A to 300D may also include additional blocks not shown and/or omit some of the blocks shown, and the scope of this disclosure is not limited thereto.

As shown in FIG. 3A, in 301, the connected-state UE 211 and the gNB 220 may report a sensing capability to the SF 232. Specifically, when the SF 232 receives a sensing service request, the SF 232 first needs to determine a gNB that can participate in a sensing process. When determining the gNB that can participate in the sensing process, the SF 232 needs to first send a sensing capability request message to the gNB (for example, the gNB 220). Then, after receiving the sensing capability request message, the gNB may report its sensing capability to the SF 232, including information such as a sensing resolution, a sensing accuracy, and a sensing range. In this way, the SF 232 can learn of sensing capabilities of the gNB 220 and all connected-state UEs 211. The SF 232 may determine, based on information such as a sensing area and a sensing capability of a gNB, a gNB (for example, the gNB 220) configured to execute a sensing task.

In 302, the SF 232 may send a UE location information obtaining request to the AMF 231, where the UE location information obtaining request may carry information (for example, a gNB ID list) about the gNB, to obtain location information of the connected-state UE 211 served by the gNB configured to execute the sensing task. Specifically, the gNB identifier (identifier, ID) list may be information about the determined gNB configured to execute the sensing task.

In 303, the AMF 231 may send UE location information to the SF 232, and the UE location information may carry the gNB ID list.

In 304, the SF 232 may select, based on the information such as the sensing area, the UE location information, a UE sensing capability, and a network status, the connected-state UE 211 that participates in the sensing process, and determine whether a quantity of selected connected-state UEs that participate in the sensing process can meet a sensing task.

If the quantity of selected connected-state UEs that participate in the sensing process cannot meet the sensing task, the communication process 300B continues after the communication process 300A.

As shown in FIG. 3B-1 and FIG. 3B-2, in 305, if a quantity of connected-state UEs whose sensing capability meets a capability requirement of the sensing task is insufficient, the SF 232 may send request information to the AMF 231, to request the idle-state or inactive-state UE 210 served by the gNB to report capability information and location information. The request information may carry indication information and a gNB ID list. Specifically, the gNB ID list may be information about a determined gNB configured to execute the sensing task. The indication information may be used to page an idle-state or inactive-state UE that has a sensing capability. The indication information may include a requirement that the UE has the sensing capability. For example, a value of 0 or 1 of one bit in the indication information may respectively indicate that the UE is not required to have the sensing capability and that the UE is required to have the sensing capability. Additionally or alternatively, the indication information may include at least one of the following capability requirements: a sensing type supported by the UE, a sensing range supported by the UE, a sensing resolution, a sensing accuracy, and the like. The sensing type may include sensing modes such as base station-to-terminal device (for example, the sensing mode shown in FIG. 1A), terminal device-to-base station (for example, the sensing mode shown in FIG. 1B), and terminal device self-transmit-and-receive (including terminal device self-transmission and self-reception, or terminal device A-to-terminal device B). For example, a sensing type requirement may be indicated by using a bit in the indication information. In an example, the sensing type requirement may be indicated by using values of three bits. For example, 000 indicates that the terminal device is required to support a sensing mode of "base station-to-terminal device", 001 indicates that the terminal device is required to support a sensing mode of "terminal device-to-base station", 010 indicates that the terminal device is required to support a sensing mode of "terminal device self-transmit-and-receive", 011 indicates that the terminal device is required to support a sensing mode of "terminal device A-to-terminal device B", 100 indicates that the terminal device is required to support sensing modes of "base station-to-terminal device" and "terminal device-to-base station", and 101 indicates that the terminal device is required to support sensing modes of "base station-to-terminal device" and "terminal device self-transmit-and-receive". In another example, the sensing type requirement may be indicated in a bit mapping manner. For example, values of 0 or 1 of four bits respectively indicate whether the terminal device is required to support sensing modes of "base station-to-terminal device", "terminal device-to-base station", "terminal device self-transmit-and-receive", and "terminal device A-to-terminal device B". The sensing resolution may be a minimum distance (usually in a unit of meter) at which the UE can sense and distinguish two targets. The sensing range supported by the UE may include a sensing range value or range in a unit of meter, centimeter, or the like. The sensing accuracy may be a number ranging from 0 to 1. For example, the indication information may be used to page all idle-state or inactive-state UEs that have a sensing capability. In another example, the indication information may be used to page all idle-state or inactive-state UEs that support "base station-to-terminal device" and whose sensing range is greater than 10 meters.

In 306, the AMF 231 may initiate paging (for example, unicast paging or group paging), and a paging message may carry the indication information.

In 307, the gNB 220 may perform paging (for example, unicast paging or group paging), and a paging message may carry the indication information.

In 308, after receiving the paging message, the idle-state or inactive-state UE 210 may determine whether a sensing identifier stored by the UE 210 matches the indication information. Specifically, the sensing identifier may be an identifier including a sensing capability of the UE, and the identifier including the sensing capability of the UE may be used to match a sensing capability in the indication information. In another example, the sensing identifier may be information such as a sensing service, a user ID, and whether the sensing capability is available, to match the indication information. This is not limited herein in this disclosure.

In 309, the idle-state or inactive-state UE 210 that meets a requirement of the indication information may send an RRCSetupRequest message or an RRCResumeRequest message to the gNB 220, to request to reestablish or resume an RRC connection.

In 310, after receiving the request for re-establishing or resuming the RRC connection from the idle-state or inactive-state UE 210, the gNB 220 may respond with an RRCSetup or RRCResume message.

In 311, after receiving the response of the gNB 220, the idle-state or inactive-state UE 210 may send an RRCSetup message or a ResumeComplete message, so that the idle-state or inactive-state UE 210 completes RRC connection re-setup or resumption.

In 312, the UE whose RRC connection is resumed may send a response message, and the response message may carry sensing capability information of the UE. In some examples, sensing capability information of the idle-state or inactive-state UE that meets a requirement of the indication information may also be included in the RRCSetupRequest message or the RRCResumeRequest message in step 309, or the RRCSetup message or the ResumeComplete message in step 311. Alternatively, the sensing capability information of the UE whose RRC connection is resumed may be sent in response to a request from the gNB 220.

In 313, the gNB 220 may send a response message to the AMF 231. The response message may carry the sensing capability information and location information of the UE whose RRC connection is resumed, and carry indication information (for example, a gNB ID) of the gNB 220.

In 314, the AMF 231 may send a response message to the SF 232. The response message may carry the sensing capability information and the location information of the UE whose RRC connection is resumed, and carry indication information of an associated gNB, for example, a gNB ID list. In an example, a gNB ID in the gNB ID list is associated with the sensing capability information and/or the location information of the UE, to indicate a network coverage of a gNB within which the UE corresponding to the reported sensing capability information and/or the location information is located.

In 315, after receiving the sensing capability information of the UE whose RRC connection is resumed, the SF 232 may select, by combining information such as a sensing area, the location information of the UE, a sensing capability of the UE, and a network status, an idle-state or inactive-state UE to participate in the sensing process. In an example, the SF 232 may select the idle-state or inactive-state UE 210 to participate in the sensing process.

The SF 232 may determine whether the UE whose RRC connection is resumed remains in a connected state to execute a sensing task or resumes to an idle state or an inactive state to execute the sensing task.

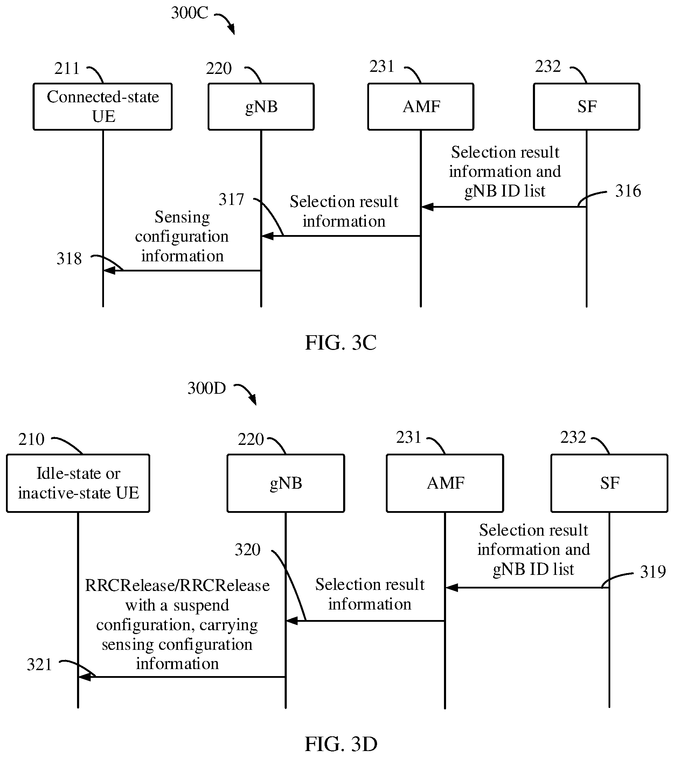

If the SF 232 determines that the UE whose RRC connection is resumed executes the sensing task in the connected state, the communication process 300C continues after the communication process 300B. As shown in FIG. 3C, in 316, the SF 232 sends selection result information to the AMF 231, and the selection result information carries the gNB ID list.

In 317, the AMF 231 sends the selection result information to the gNB 220 indicated in the gNB ID list.

In 318, the gNB 220 sends sensing configuration information to the UE 211 indicated in the selection result information. The sensing configuration information may include information about resources such as time domain, frequency domain, space domain, and code domain that are used to send a sensing signal. The UE that receives the message remains in the connected state and executes the sensing task based on the sensing configuration information. It may be understood that the connected-state UE 211 in FIG. 3C may include the connected-state UE selected in the communication process 300A and the UE whose RRC connection is resumed in the communication process 300B.

If the SF 232 determines that the UE whose RRC connection is resumed executes the sensing task in an idle state or an inactive state, the communication process 300D continues after the communication process 300B. As shown in FIG. 3D, in 319, the SF 232 sends selection result information to the AMF 231, and the selection result information carries the gNB ID list.

In 320, the AMF 231 sends the selection result information to the gNB 220 indicated in the gNB ID list.

In 321, the gNB 220 sends an RRCRelease message or an RRCRelease message with a suspend configuration to the UE 210 that is indicated in the selection result information and whose RRC connection is resumed, to release the RRC connection. The message may further carry sensing configuration information. The sensing configuration information may include information about resources such as time domain, frequency domain, space domain, and code domain that are used to send a sensing signal. After receiving the message, the UE 210 whose RRC connection is resumed may be released to an idle state or an inactive state, and execute the sensing task based on the sensing configuration information.

In this way, the SF may select a UE for sensing. The SF first selects a connected-state UE to participate in the sensing process. The connected-state UE reports a sensing capability to the SF. The SF selects a connected-state UE to participate in the sensing process based on a sensing area, location information of the UE, and a sensing capability of the UE. When selecting the connected-state UE to participate in the sensing process, the SF may request location information of connected-state UEs served by the gNB that participates in the sensing task from the AMF, and accurately select a connected-state UE that can participate in the sensing process based on location information of the connected-state UE, a sensing area, a sensing capability of the connected-state UE, and the like.

When a quantity of connected-state UEs that meet a sensing requirement does not meet the sensing task, the SF may request the AMF to initiate a paging message to wake up an idle-state or inactive-state UE 0 to enter a connected state, so that the UE 0 reports a sensing capability and participates in the sensing process. Specifically, the SF sends request information to the AMF, where the request information carries indication information. After receiving the request information, the AMF initiates unicast paging or multicast paging, where the paging message includes the indication information. The indication information is used to page the idle-state or inactive-state UE that has the sensing capability. The indication information may include UE sensing capability requirements such as a sensing type supported by the UE, a sensing range of the UE, and sensing accuracy of the UE, so that the idle-state or inactive-state UE that meets the indication information requirement responds to the paging message and participates in the sensing process.

In this manner, after receiving the sensing task, the core network device may select the connected-state UE that meets the sensing requirement, and when a quantity of connected-state UEs that meet the sensing requirement is insufficient, the core network device may activate and select the idle-state or inactive-state UE through paging, to participate in the sensing process. This can avoid a case in which the sensing task cannot be executed when the quantity of connected-state UEs is insufficient, and a success rate of executing the sensing task is improved.

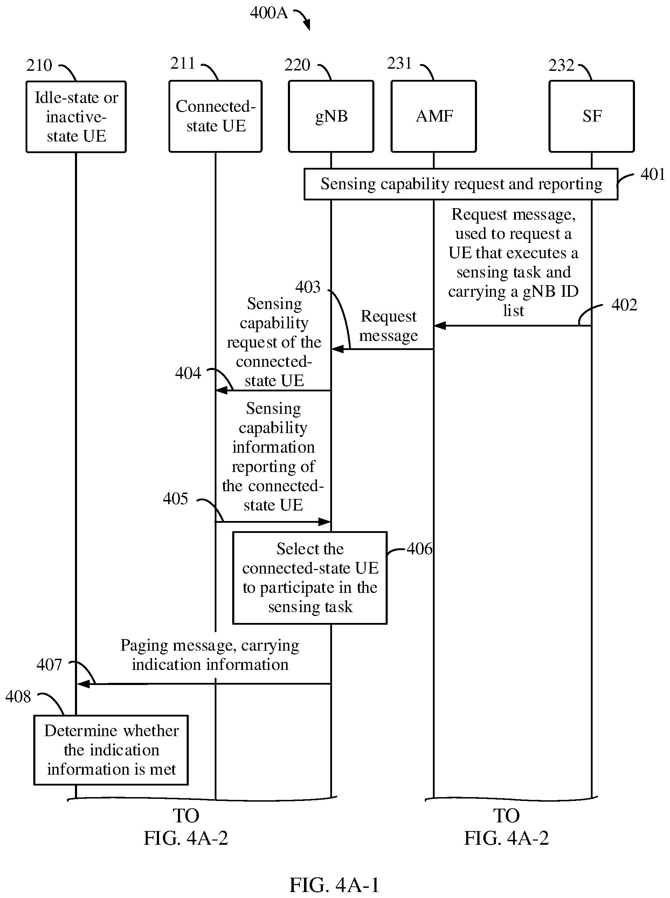

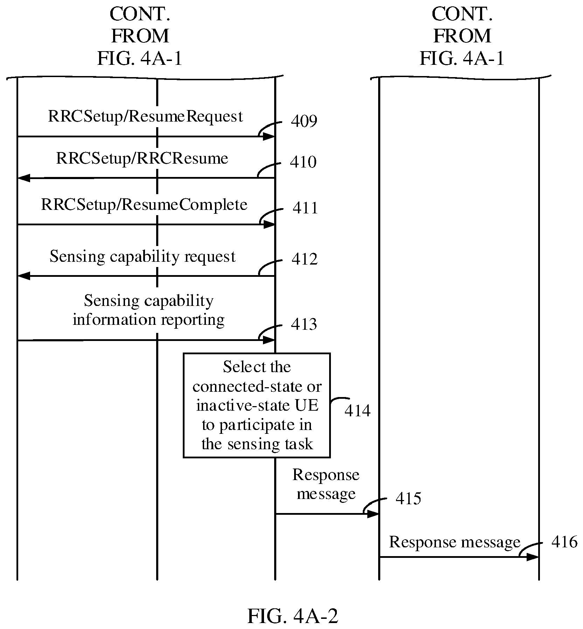

FIG. 4A-1 to FIG. 4C are signaling diagrams of communication processes 400A to 400C of terminal device selection based on an access network device according to some embodiments of this disclosure. The communication processes 400A to 400C may be applied to the scenarios shown in FIG. 1A and FIG. 1B or other possible scenarios. For a purpose of illustration, FIG. 4A-1 to FIG. 4C are described with reference to FIG. 1A and FIG. 1B, and the communication processes 400A to 400C may involve accessing a connected-state UE 211, an idle-state or inactive-state UE 210, a gNB 220, an AMF 231, and an SF 232. The connected-state UE 211 and the idle-state or inactive-state UE 210 may be specific examples of the terminal device 110 in FIG. 1A and FIG. 1B, and are configured to receive or transmit a communication signal and a sensing signal, to implement a function of performing wireless communication and wireless sensing with the gNB 220. The gNB 220 may be a specific example of the access network device 120 in FIG. 1A and FIG. 1B. The AMF 231 and the SF 232 may be a part of the core network device 130 in FIG. 1A and FIG. 1B. The SF 232 is a core network element configured to implement a sensing function. It should be understood that the SF 232 is merely an example, and is not intended to be limited. Alternatively, the SF 232 may be implemented by another core network element. The communication processes 400A to 400C may be considered as specific examples of the communication process 200 shown in FIG. 2. It should be understood that the communication processes 400A to 400C may also include additional blocks not shown and/or omit some of the blocks shown, and the scope of this disclosure is not limited thereto.

As shown in FIG. 4A-1 and FIG. 4A-2, in 401, the gNB 220 reports a sensing capability to the SF 232. Specifically, when the SF 232 receives a sensing service request, the SF 232 first needs to determine a gNB that can participate in a sensing process. When determining the gNB that can participate in the sensing process, the SF 232 needs to first send a sensing capability request message to the gNB (for example, the gNB 220). Then, after receiving the sensing capability request message, the gNB may report its sensing capability to the SF 232, including information such as a sensing resolution, a sensing accuracy, and a sensing range. In this way, the SF 232 can learn of sensing capabilities of the gNB 220 and all connected-state UEs 211. The SF 232 may determine, based on information such as a sensing area and a sensing capability of a gNB, a gNB (for example, the gNB 220) configured to execute a sensing task.

In 402, the SF 232 sends a request message to the AMF 231, to request a UE used to request to execute the sensing task, and the request message may carry a gNB ID list. Specifically, the gNB ID list may be information about a determined gNB configured to execute the sensing task.

In 403, the AMF 231 sends a request message to the gNB 220.

In 404, the gNB 220 sends a sensing capability request to the connected-state UE 211, to request the connected-state UE 211 to report a sensing capability of the connected-state UE 211.

In 405, the connected-state UE 211 reports sensing capability information to the gNB 220.

In 406, the gNB 220 selects, based on information such as a sensing area, a sensing type supported by the UE, a sensing range of the UE, a sensing accuracy of the UE, a sensing capability of the UE, and a network status, a connected-state UE 211 that participates in the sensing process, and determines whether a quantity of selected connected-state UEs that participate in the sensing process can meet the sensing task.

In 407, if the quantity of the selected connected-state UEs that participate in the sensing process cannot meet the sensing task, the gNB 220 pages the UE (for example, unicast paging or group paging), where a paging message may carry indication information, and be used for paging an idle-state or inactive-state UE that has a sensing capability. Specifically, the indication information is used to page the idle-state or inactive-state UE 210 that has a sensing capability. The indication information may include a requirement that the UE has the sensing capability. For example, a value of 0 or 1 of one bit in the indication information may respectively indicate that the UE is not required to have the sensing capability and that the UE is required to have the sensing capability. Additionally or alternatively, the indication information may include at least one of the following capability requirements: a sensing type supported by the UE, a sensing range supported by the UE, a sensing resolution, a sensing accuracy, and the like. The sensing type may include sensing modes such as base station-to-terminal device (for example, the sensing mode shown in FIG. 1A), terminal device-to-base station (for example, the sensing mode shown in FIG. 1B), and terminal device self-transmit-and-receive (including terminal device self-transmission and self-reception, or terminal device A-to-terminal device B). For example, a sensing type requirement may be indicated by using a bit in the indication information. In an example, the sensing type requirement may be indicated by using values of three bits. For example, 000 indicates that the terminal device is required to support a sensing mode of "base station-to-terminal device", 001 indicates that the terminal device is required to support a sensing mode of "terminal device-to-base station", 010 indicates that the terminal device is required to support a sensing mode of "terminal device self-transmit-and-receive", 011 indicates that the terminal device is required to support a sensing mode of "terminal device A-to-terminal device B", 100 indicates that the terminal device is required to support sensing modes of "base station-to-terminal device" and "terminal device-to-base station", and 101 indicates that the terminal device is required to support sensing modes of "base station-to-terminal device" and "terminal device self-transmit-and-receive". In another example, the sensing type requirement may be indicated in a bit mapping manner. For example, values of 0 or 1 of four bits respectively indicate whether the terminal device is required to support sensing modes of "base station-to-terminal device", "terminal device-to-base station", "terminal device self-transmit-and-receive", and "terminal device A-to-terminal device B". The sensing resolution may be a minimum distance (usually in a unit of meter) at which the UE can sense and distinguish two targets. The sensing range supported by the UE may include a sensing range value or range in a unit of meter, centimeter, or the like. The sensing accuracy may be a number ranging from 0 to 1. For example, the indication information may be used to page all idle-state or inactive-state UEs that have a sensing capability. In another example, the indication information may be used to page all idle-state or inactive-state UEs that support "base station-to-terminal device" and whose sensing range is greater than 10 meters.

In 408, after receiving the paging message, the idle-state or inactive-state UE 210 may determine whether a sensing identifier stored by the UE 210 matches the indication information. Specifically, the sensing identifier may be an identifier including a sensing capability of the UE, and the identifier including the sensing capability of the UE may be used to match a sensing capability in the indication information. In another example, the sensing identifier may be information such as a sensing service, a user ID, and whether the sensing capability is available, to match the indication information. This is not limited herein in this disclosure.

In 409, the idle-state or inactive-state UE 210 that meets a requirement of the indication information may send an RRCSetupRequest message or an RRCResumeRequest message to the gNB 220, to request to reestablish or resume an RRC connection.

In 410, after receiving the request for re-establishing or resuming the RRC connection from the idle-state or inactive-state UE 210, the gNB 220 may respond with an RRCSetup or RRCResume message.

In 411, after receiving the response of the gNB 220, the idle-state or inactive-state UE 210 may send an RRCSetup message or a ResumeComplete message, so that the idle-state or inactive-state UE 210 completes RRC connection re-setup or resumption.

In 412, the gNB 220 may send a sensing capability request to the UE whose RRC connection is resumed.

In 413, the UE whose RRC connection is resumed may report sensing capability information to the gNB 220. In some examples, sensing capability information of the idle-state or inactive-state UE that meets a requirement of the indication information may also be included in the RRCSetupRequest message or the RRCResumeRequest message in step 409, or the RRCSetup message or the ResumeComplete message in step 411. Alternatively, the sensing capability information of the UE whose RRC connection is resumed may also be sent in response to receiving of an RRCSetup message or a ResumeComplete message.

In 414, after receiving the sensing capability information of the UE whose RRC connection is resumed, the gNB 220 may select, based on information such as a sensing area, a sensing type supported by the UE, a sensing range of the UE, sensing accuracy of the UE, a sensing capability of the UE, and a network status, an idle-state or inactive-state UE that participates in the sensing process. In an example, the gNB 220 may select the idle-state or inactive-state UE 210 to participate in the sensing process.

In 415, the gNB 220 sends a response message to the AMF 231, indicating that UE selection execution is completed.

In 416, the AMF 231 sends a response message to the SF 232, indicating that UE selection execution is completed.

The gNB 220 may determine whether the UE whose RRC connection is resumed remains in a connected state to execute a sensing task or resumes to an idle state or an inactive state to execute the sensing task.

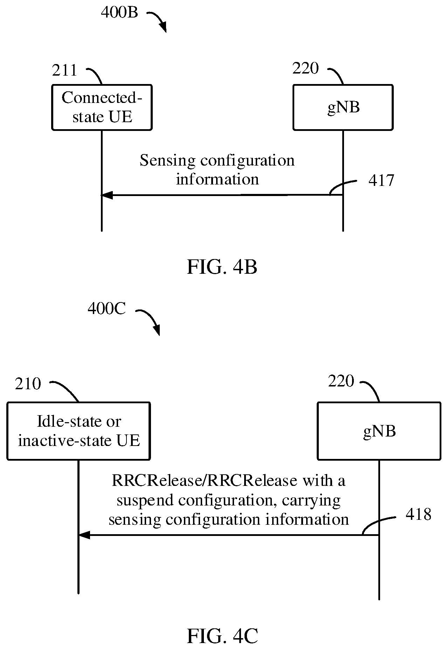

If the gNB 220 determines that the UE whose RRC connection is resumed executes the sensing task in a connected state, the communication process 400B continues after the communication process 400A. As shown in FIG. 4B, in 417, the gNB 220 sends sensing configuration information to the connected-state UE 211. The sensing configuration information may include information about resources such as time domain, frequency domain, space domain, and code domain that are used to send a sensing signal. The UE that receives the message remains in the connected state and executes the sensing task based on the sensing configuration information. It may be understood that the connected-state UE 211 in FIG. 3C may include the connected-state UE selected in step 406 and the UE whose RRC connection is resumed in step 414.

If the gNB 220 determines that the UE whose RRC connection is resumed executes the sensing task in an idle state or an inactive state, the communication process 400A is performed after the communication process 400C. As shown in FIG. 4C, in 418, the gNB 220 sends an RRCRelease message or an RRCRelease message with a suspend configuration to the UE 210 that is selected in step 414 and whose RRC connection is resumed, to release the RRC connection. The message may further carry sensing configuration information. The sensing configuration information may include information about resources such as time domain, frequency domain, space domain, and code domain that are used to send a sensing signal. After receiving the message, the UE 210 whose RRC connection is resumed may be released to an idle state or an inactive state, and execute the sensing task based on the sensing configuration information.

In this way, the gNB select a UE for sensing. The gNB first selects a connected-state UE to participate in the sensing process. The gNB requests the connected-state UE to report a sensing capability of the UE. The gNB selects the connected-state UE to participate in the sensing process based on a sensing area, a sensing type supported by the UE, a sensing range of the UE, a sensing accuracy of the UE, and a sensing capability of the UE. When a quantity of connected-state UEs that meet a sensing requirement does not meet the sensing task, the gNB may initiate a paging message to wake up an idle-state or inactive-state UE to enter a connected state, so that the UE reports a sensing capability and participates in the sensing process.

In this manner, after receiving the request message of the core network device, the access network device may select the connected-state UE that meets the sensing requirement, and when the quantity of connected-state UEs that meet the sensing requirement is insufficient, the access network device may activate and select, through paging, the idle-state or inactive-state UE to participate in the sensing process. This can avoid a case in which the sensing task cannot be executed when the quantity of connected-state UEs is insufficient, and a success rate of executing the sensing task is improved.

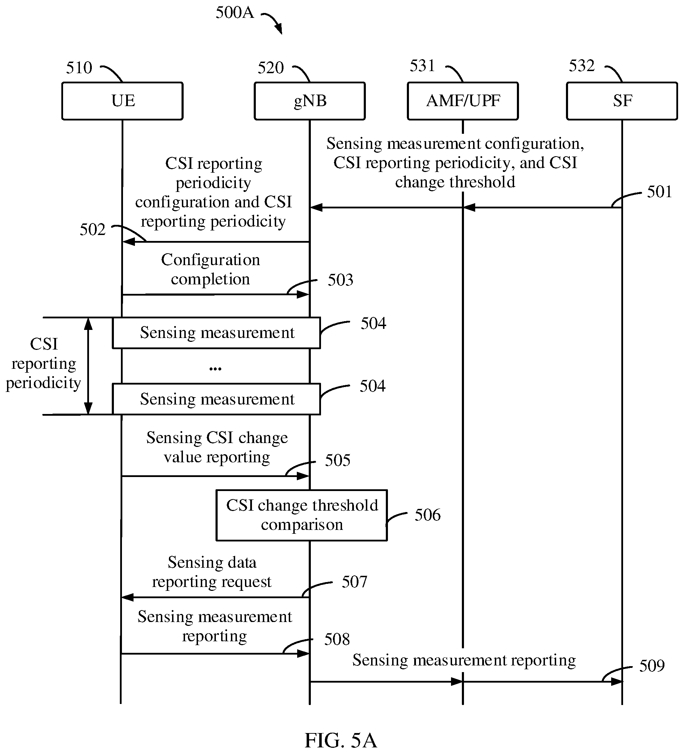

FIG. 5A is a signaling diagram of a communication process 500A of reporting sensing measurement data according to some embodiments of this disclosure. The communication process 500A may be applied to the scenarios shown in FIG. 1A and FIG. 1B or other possible scenarios. For a purpose of illustration, FIG. 5A is described with reference to FIG. 1A and FIG. 1B, and the communication process 500A may involve accessing a UE 510, a gNB 520, an AMF/UPF 531, and an SF 532. The UE 510 may be a specific example of the terminal device 110 in FIG. 1A and FIG. 1B, and is configured to receive or transmit a communication signal and a sensing signal, to implement a function of performing wireless communication and wireless sensing with the gNB 520. The gNB 520 may be a specific example of the access network device 120 in FIG. 1A and FIG. 1B. The AMF/UPF 531 and the SF 532 may be a part of the core network device 130 in FIG. 1A and FIG. 1B. The SF 532 is a core network element configured to implement a sensing function. It should be understood that the SF 532 is merely an example, and is not intended to be limited. Alternatively, the SF 532 may be implemented by another core network element. It should be understood that the communication process 500A may also include additional blocks not shown and/or omit some of the blocks shown, and that the scope of this disclosure is not limited thereto.

As shown in FIG. 5A, in 501, the SF 532 may send sensing measurement configuration information to the gNB 520 via the AMF/UPF 531, where the sensing measurement configuration information may include a CSI reporting periodicity and a CSI change threshold. Specifically, CSI may reflect information such as a channel gain and a phase. Due to movement, blocking, and the like of a target, CSI phases at different moments may change to different degrees. In addition, when an environment is unchanged, an amplitude and a phase of the CSI should be stable or change slightly. The CSI reporting periodicity may be specified as a periodicity after which the UE 510 can perform a CSI reporting operation. The sensing CSI change value is a change value of a CSI phase measured by the UE 510 in one or more sensing measurement processes. For example, the CSI change value may be a change value of a CSI phase quotient or a CSI phase difference measured by the UE 510 in one or more sensing measurement processes.

In 502, the gNB 520 may send a CSI reporting periodicity configuration request to the UE 510, and the reporting periodicity configuration request may include a CSI reporting periodicity.

In 503, after configuration is completed, the UE 510 may send a configuration completion message to the gNB 520.

In 504, within the CSI reporting periodicity, the UE 510 and the gNB 520 may perform sensing measurement on a target.

In 505, when the CSI reporting periodicity is reached, the UE 510 may report a sensing CSI change value within the CSI reporting periodicity.

In 506, the gNB 520 may compare the received sensing CSI change value with a CSI change threshold, to determine whether sensing measurement data needs to be reported.

In 507, the gNB 520 may send a sensing measurement data reporting request to the UE 510 whose CSI change value exceeds a CSI reporting threshold.

In 508, the UE 510 that receives the sensing measurement data reporting request may report a sensing measurement result to the gNB 520.

In 509, the gNB 520 may report the sensing measurement result to the SF 532 via the AMF/UPF 531.

In this manner, the access network device may configure a CSI reporting periodicity for the terminal device, and the terminal device may send, to the access network device after the reporting periodicity is reached, a sensing CSI change value within the reporting periodicity. The access network device compares the received sensing CSI change value with a CSI change threshold, and requests the terminal device whose CSI change value exceeds a CSI reporting threshold to send sensing measurement data. By periodically reporting the CSI change value by the terminal device, and determining, by the access network device based on the CSI reporting threshold, whether the terminal device should report the sensing measurement data, a data amount and a reporting frequency of sensing measurement data reporting can be reduced.

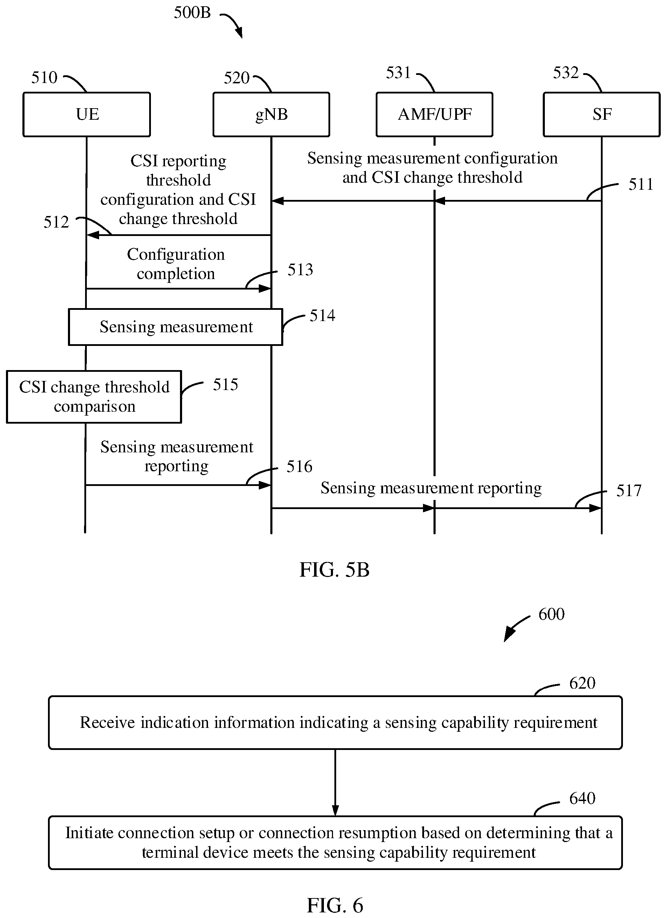

FIG. 5B is a signaling diagram of a communication process 500B of reporting sensing measurement data according to some embodiments of this disclosure. The communication process 500B may be applied to the scenarios shown in FIG. 1A and FIG. 1B or other possible scenarios. For a purpose of illustration, FIG. 5B is described with reference to FIG. 1A and FIG. 1B, and the communication process 500B may involve accessing a UE 510, a gNB 520, an AMF/UPF 531, and an SF 532. The UE 510 may be a specific example of the terminal device 110 in FIG. 1A and FIG. 1B, and is configured to receive or transmit a communication signal and a sensing signal, to implement a function of performing wireless communication and wireless sensing with the gNB 520. The gNB 520 may be a specific example of the access network device 120 in FIG. 1A and FIG. 1B. The AMF/UPF 531 and the SF 532 may be a part of the core network device 130 in FIG. 1A and FIG. 1B. The SF 532 is a core network element configured to implement a sensing function. It should be understood that the SF 532 is merely an example, and is not intended to be limited. Alternatively, the SF 532 may be implemented by another core network element. It should be understood that the communication process 500B may also include additional blocks not shown and/or omit some of the blocks shown, and that the scope of this disclosure is not limited thereto.

As shown in FIG. 5B, in 511, the SF 532 may send sensing measurement configuration information to the gNB 520 via the AMF/UPF 531, where the sensing measurement configuration information may include a CSI change threshold. Specifically, CSI may reflect information such as a channel gain and a phase. Due to movement, blocking, and the like of a target, CSI phases at different moments may change to different degrees. In addition, when an environment is unchanged, an amplitude and a phase of the CSI should be stable or change slightly. A CSI reporting periodicity may be specified as a periodicity after which the UE 510 can perform a CSI reporting operation. A sensing CSI change value is a change value of a CSI phase measured by the UE 510 in one or more sensing measurement processes. For example, a CSI change value may be a change value of a CSI phase quotient or a CSI phase difference measured by the UE 510 in one or more sensing measurement processes.

In 512, the gNB 520 may send a CSI reporting periodicity configuration request to the UE 510, and the reporting periodicity configuration request may include the CSI change threshold.

In 513, after configuration is completed, the UE 510 may send a configuration completion message to the gNB 520.

In 514, the UE 510 and the gNB 520 may perform sensing measurement on a target.

In 515, the UE 510 may compare a sensing CSI change value obtained through measurement with the CSI change threshold to determine whether sensing measurement data needs to be reported. If the CSI change value is greater than the CSI change threshold, the sensing measurement data is reported. Otherwise, the sensing measurement data is not reported.

In 516, the UE 510 detecting that the CSI change value is greater than the CSI change threshold reports a sensing measurement result to gNB 520.

In 517, the gNB 520 reports the sensing measurement result to the SF 532 via the AMF/UPF 531.

In this manner, the access network device may configure the CSI change threshold for the terminal device. The terminal device compares a sensing CSI change value obtained through measurement with the CSI change threshold. If the CSI change value is greater than the CSI change threshold, the terminal device reports a sensing measurement data. Otherwise, the terminal device does not report the sensing measurement data. By determining, by the terminal device, whether the terminal device should report the sensing measurement data based on the CSI reporting threshold, a data amount and a reporting frequency of sensing measurement data reporting can be reduced.

Some embodiments of this disclosure relate to a communication process of reporting sensing measurement data. For a scenario in which a base station sends sensing measurement data to a terminal device (for example, the scenario 100A shown in FIG. 1A), a core network device may send a sensing measurement configuration to an access network device. According to some embodiments of this disclosure, an amount of reported sensing measurement data may be reduced. If CSI at a current moment basically does not change or slightly changes compared with CSI at a previous moment, it may be considered that a sensing target does not move or is not blocked, and sensing measurement data does not need to be reported. For example, when a location of a target is continuously sensed, if the target moves slowly, a data reporting frequency may be reduced, thereby reducing a data reporting amount. In addition, according to some embodiments of this disclosure, a processing delay and computing pressure of the terminal device can be reduced. Because the terminal device needs to perform a large amount of calculation when generating a sensing measurement data result, a sensing measurement data reporting frequency is reduced, so that calculation of the sensing measurement data result for each sensing measurement can be avoided, thereby reducing a processing delay and calculation pressure of the terminal device. For example, the terminal device may avoid calculating a distance-Doppler velocity spectrum for CSI of each sensing measurement, thereby reducing a processing delay and calculation pressure of the terminal device.

FIG. 6 is a schematic flowchart of a method 600 implemented at a terminal device according to some embodiments of this disclosure. In a possible implementation, the method 600 may be implemented by the terminal device 110 in FIG. 1A and FIG. 1B. In another possible implementation, the method 600 may alternatively be implemented by another electronic apparatus independent of the electronic apparatuses shown in FIG. 1A and FIG. 1B. In an example, the following describes the method 600 by using an example in which the method 600 is implemented by the terminal device 110 in FIG. 1A and FIG. 1B.

In 620, the terminal device 110 in an idle state or an inactive state receives indication information indicating a sensing capability requirement.

In 640, the terminal device 110 in the idle state or the inactive state initiates connection setup or connection resumption based on determining that the sensing capability requirement is met.

In some embodiments, in response to receiving a connection setup message or a connection resume message, the terminal device 110 sends sensing capability information of the terminal device 110.

In some embodiments, in response to receiving a first request message used to request the sensing capability information, the terminal device 110 sends the sensing capability information of the terminal device 110.

In some embodiments, the sensing capability requirement includes at least one of the following: a sensing type, a sensing range, a sensing resolution, or a sensing accuracy.

In some embodiments, the indication information is included in a paging message.

In some embodiments, the terminal device 110 sends information related to a location of the terminal device 110.

In some embodiments, the terminal device 110 receives configuration information related to a sensing process, and performs the sensing process based on the configuration information.

In some embodiments, the terminal device 110 receives the configuration information and state transition information that are related to the sensing process, where the state transition information indicates the terminal device to transition from a connected state to an idle state or an inactive state; transitions from the connected state to the idle state or the inactive state based on the state transition information; and after transitioning to the idle state or the inactive state, performs the sensing process based on the configuration information.

In some embodiments, the terminal device 110 receives channel state information (CSI) reporting configuration information, where the CSI reporting configuration information is used to configure the terminal device to report CSI information related to CSI; performs the sensing process to obtain CSI information; sends the CSI information to the access network device based on the CSI reporting configuration information; receives a request message, where the request message is used to request sensing data of the sensing process; and sends the sensing data.

In some embodiments, the sending of the CSI information is used by the access network device to determine whether the sensing data needs to be reported.

In some embodiments, the CSI reporting configuration information includes a reporting periodicity.

In some embodiments, the CSI information includes a CSI change amount.

In some embodiments, the terminal device 110 receives sensing reporting configuration information from the access network device, where the sensing reporting configuration information indicating a condition for the terminal device to report sensing data of the sensing process, and the condition is associated with CSI; performs the sensing process to obtain CSI; and sends the sensing data of the sensing process to the access network device based on determining that the CSI meets the condition.

In some embodiments, the sensing reporting configuration information includes a threshold, and the condition includes that a change amount of the CSI is greater than the threshold.

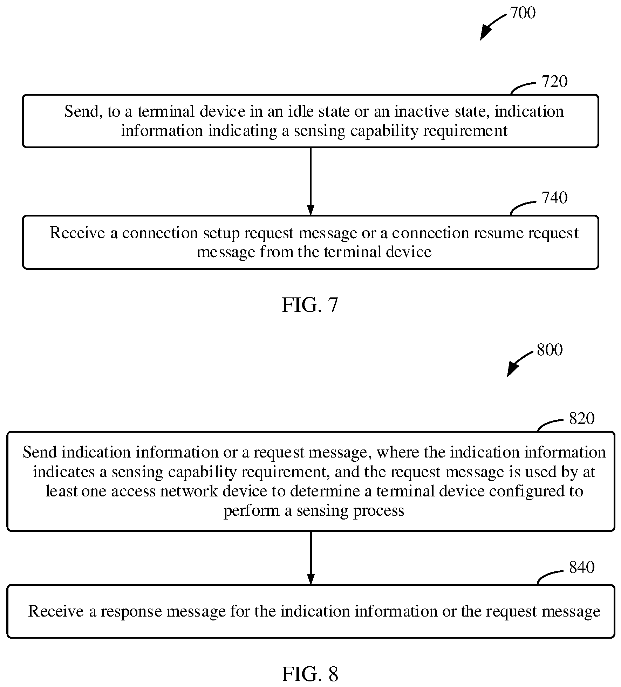

FIG. 7 is a schematic flowchart of a method 700 implemented at a terminal device according to some embodiments of this disclosure. In a possible implementation, the method 700 may be implemented by the access network device 120 in FIG. 1A and FIG. 1B. In another possible implementation, the method 700 may alternatively be implemented by another electronic apparatus independent of the electronic apparatuses shown in FIG. 1A and FIG. 1B. In an example, the following describes the method 700 by using an example in which the method 700 is implemented by the access network device 120 in FIG. 1A and FIG. 1B.

In 720, the access network device 120 sends, to a terminal device in an idle state or an inactive state, indication information indicating a sensing capability requirement.

In 740, the access network device 120 receives a connection setup request message or a connection resume request message from the terminal device.

In some embodiments, based on sending a connection setup message or a connection resume message to the terminal device, the access network device 120 receives sensing capability information of the terminal device from the terminal device.

In some embodiments, based on sending, to the terminal device, a first request message used to request the sensing capability information, the access network device 120 receives the sensing capability information of the terminal device from the terminal device.

In some embodiments, the sensing capability requirement includes at least one of the following: a sensing type, a sensing range, a sensing resolution, or a sensing accuracy.

In some embodiments, the indication information is included in a paging message.

In some embodiments, the indication information is first indication information, and the access network device 120 receives, from a core network device, second indication information indicating a sensing capability requirement, where the first indication information is determined based on the second indication information.

In some embodiments, the access network device 120 sends the sensing capability information to the core network device.

In some embodiments, the access network device 120 receives information related to a location of the terminal device from the terminal device in a connected state, and sends the information related to the location of the terminal device to the core network device.

In some embodiments, the access network device 120 receives, from the core network device, an indication of at least one terminal device configured to perform the sensing process, and the at least one terminal device includes the terminal device.

In some embodiments, the access network device 120 receives a request message from the core network device, where the request message is used to request the access network device to determine a terminal device configured to perform a sensing process; and determines a first group of terminal devices based on the request message, where the first group of terminal devices is in a connected state and can be configured to perform the sensing process, and the indication information is sent based on determining that a quantity of first group of terminal devices is less than a threshold quantity.

In some embodiments, the access network device 120 determines, based on the sensing capability information, at least one terminal device configured to perform a sensing process, where the at least one terminal device includes a terminal device in a connected state; and sends, to the core network device, a response message for the request message used to request the access network device to determine a terminal device configured to perform the sensing process.

In some embodiments, the access network device 120 sends configuration information related to the sensing process to the terminal device.

In some embodiments, the access network device 120 sends, to the terminal device in a connected state, the configuration information related to the sensing process and state transition information, where the state transition information indicates the terminal device to transition from the connected state to an idle state or an inactive state.

In some embodiments, the access network device 120 receives channel state information (CSI) reporting configuration information and sensing reporting configuration information from the core network device, where the CSI reporting configuration information is used to configure at least one terminal device that is used to perform a sensing process to report CSI information related to CSI, the sensing reporting configuration information indicates a condition of reporting sensing data of the sensing process by the at least one terminal device, and the condition is associated with the CSI; sends the CSI reporting configuration information to the at least one terminal device; receives the CSI information from the at least one terminal device; sends a request message to the at least one terminal device based on determining that the CSI meets the condition, where the request message is used to request the sensing data of the sensing process; and receives the sensing data from the at least one terminal device.

In some embodiments, the CSI reporting configuration information includes a reporting periodicity, the CSI information includes a change amount of the CSI, the sensing reporting configuration information includes a threshold, and the condition includes that the change amount of the CSI is greater than the threshold.

In some embodiments, the access network device 120 receives sensing reporting configuration information from the core network device, where the sensing reporting configuration information indicates a condition for at least one terminal device configured to perform a sensing process to report sensing data of the sensing process, and the condition is associated with CSI;
sends the sensing reporting configuration information to the at least one terminal device; and receives sensing data from the at least one terminal device.

In some embodiments, the sensing reporting configuration information of the access network device 120 includes a threshold, and the condition includes that a change amount of the CSI is greater than the threshold.

FIG. 8 is a schematic flowchart of a method 800 implemented at a terminal device according to some embodiments of this disclosure. In a possible implementation, the method 800 may be implemented by the core network device 130 in FIG. 1A and FIG. 1B. In another possible implementation, the method 800 may alternatively be implemented by another electronic apparatus independent of the electronic apparatuses shown in FIG. 1A and FIG. 1B. In an example, the following describes the method 800 by using an example in which the method 600 is implemented by the core network device 130 in FIG. 1A and FIG. 1B.

In 820, the core network device 130 sends indication information or a request message, where the indication information indicates a sensing capability requirement, and the request message is used by at least one access network device to determine a terminal device configured to perform a sensing process.

In 840, the core network device 130 receives a response message for the indication information or the request message.

In some embodiments, the core network device 130 determines the at least one access network device configured to perform the sensing process; and determines a first group of terminal devices, where the first group of terminal devices are connected to the at least one access network device and can be configured to perform the sensing process. The indication information is sent based on determining that a quantity of first group of terminal devices is less than a threshold quantity.

In some embodiments, the indication information is used to request at least one of the following: sensing capability information of a terminal device in an idle state or an inactive state, or information related to a location of the terminal device, where the sensing capability requirement includes at least one of the following: a sensing type, a sensing range, a sensing resolution, or a sensing accuracy. The response message for the indication information includes at least one of the following: the sensing capability information, the information related to the location of the terminal device, or an indication of the at least one access network device.

In some embodiments, the core network device 130 determines, based on the sensing capability information, the at least one terminal device configured to perform the sensing process, where the at least one terminal device is associated with at least one access network device; and sends an indication of the at least one terminal device and an indication of the at least one access network device.

In some embodiments, the core network device 130 determines at least one access network device configured to perform the sensing process, where the request message is used by the at least one access network device to determine a terminal device configured to perform the sensing process.

In some embodiments, the core network device 130 sends sensing reporting configuration information to the access network device, where the sensing reporting configuration information indicates a condition for the at least one terminal device configured to perform the sensing process to report sensing data of the sensing process, and the condition is associated with channel state information (CSI). In some embodiments, the sensing reporting configuration information includes a threshold, and the condition includes that a change amount of the CSI is greater than the threshold.

In some embodiments, the core network device 130 sends CSI reporting configuration information to the access network device, where the CSI reporting configuration information is used to configure at least one terminal device to report CSI-related CSI information. In some embodiments, the CSI reporting configuration information includes a reporting periodicity, and the CSI information includes a change amount of the CSI.

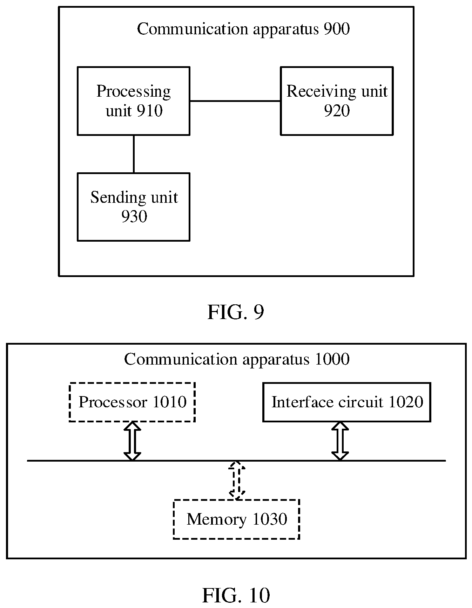

FIG. 9 is a diagram of a structure of a possible communication apparatus (also referred to as a communication device) according to an embodiment of this disclosure. The communication apparatus may implement functions of the terminal apparatus or the network apparatus in the foregoing method embodiments. Therefore, beneficial effect of the foregoing method embodiments can also be implemented. In this embodiment of this disclosure, the communication apparatus may be the terminal device 110, the access network device 120, or the core network device 130 in FIG. 1A to FIG. 2.

As shown in FIG. 9, a communication apparatus 900 includes a processing unit 910, a receiving unit 920, and a sending unit 930. The communication apparatus 900 may be configured to implement functions of the terminal device, the access network device, or the core network device in the method embodiments shown in any one of FIG. 1 to FIG. 8.

When the communication apparatus 900 is configured to implement a function of the terminal device in FIG. 1A to FIG. 2, the receiving unit 920 is configured to receive indication information indicating a sensing capability requirement, and the processing unit is configured to initiate connection setup or connection resumption based on determining that the sensing capability requirement is met.

When the communication apparatus 900 is configured to implement a function of the access network device in FIG. 1A to FIG. 2, the sending unit 930 is configured to send, to a terminal device in an idle state or an inactive state, indication information indicating a sensing capability requirement, and the receiving unit 920 is configured to receive a connection setup request message or a connection resume request message from the terminal device.

When the communication apparatus 900 is configured to implement a function of the core network device in FIG. 1A to FIG. 2, the sending unit 930 is configured to send indication information or a request message, where the indication information indicates a sensing capability requirement, and the request message is used by at least one access network device to determine a terminal device configured to perform a sensing process; and the receiving unit 920 is configured to receive a response message for the indication information or the request message.

For more detailed descriptions of the processing unit 910, the receiving unit 920, and the sending unit 930, refer to related descriptions in the embodiments shown in FIG. 2 to FIG. 8.

In some embodiments, the processing unit may be a processor, the sending unit may be a transmitter, and the receiving unit may be a receiver.

FIG. 10 is a simplified block diagram of a possible communication apparatus (also referred to as a communication device) according to an embodiment of this disclosure. As shown in FIG. 10, a communication apparatus 1000 includes a processor 1010 and an interface circuit 1020. The processor 1010 and the interface circuit 1020 are coupled to each other. It may be understood that the interface circuit 1020 may be a transceiver or an input/output interface. Optionally, the communication apparatus 1000 may further include a memory 1030, configured to: store instructions executed by the processor 1010, or store input data required by the processor 1010 to run the instructions, or store data generated after the processor 1010 runs the instructions.

When the communication apparatus 1000 is configured to implement a method in the foregoing method embodiments, the processor 1010 is configured to perform a function of the processing unit 910, and the interface circuit 1020 is configured to perform functions of the receiving unit 920 and the sending unit 930.

It may be understood that the processor in embodiments of this disclosure may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general purpose processor may be a microprocessor or any regular processor or the like.

An embodiment of this disclosure provides a communication system. The communication system may include the communication apparatuses in the embodiment shown in FIG. 9, for example, the terminal device 110, the access network device 120, or the core network device 130, or a module (for example, a chip) of the terminal device 110, the access network device 120, or the core network device 130 in FIG. 1A to FIG. 2. Optionally, the terminal device 110, the access network device 120, or the core network device 130 or the module (for example, the chip) in FIG. 1A to FIG. 2 in the communication system may perform the communication method shown in any one of FIG. 1 to FIG. 8.

An embodiment of this disclosure further provides a circuit. The circuit may be coupled to a memory, and may be configured to perform procedures related to the terminal device 110, the access network device 120, or the core network device 130 or a module (for example, a chip) of the terminal device 110, the access network device 120, or the core network device 130 in FIG. 1A to FIG. 2 in any one of the foregoing method embodiments. A chip system may include the chip, and may further include another component, like a memory or a transceiver.

It should be understood that the processor mentioned in embodiments of this disclosure may be a CPU, or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the memory mentioned in embodiments of this disclosure may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM).

It should be noted that when the processor is a general purpose processor, a DSP, an ASIC, an FPGA or another programmable logic device, a discrete gate, a transistor logic device, or a discrete hardware component, the memory (a storage module) is integrated into the processor.

It should be noted that the memory described in this specification aims to include but is not limited to these memories and any memory of another proper type.

It should be understood that sequence numbers of the foregoing processes do not mean execution sequences in various embodiments of this disclosure. The execution sequences of the processes should be determined based on functions and internal logic of the processes, and should not be construed as any limitation on the implementation processes of the embodiments of this disclosure.

A person of ordinary skill in the art may be aware that, in combination with the examples described in embodiments disclosed in this specification, modules and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this disclosure.

It may be clearly understood by a person skilled in the art that, for the purpose of convenient and brief description, for a detailed working process of the foregoing system, apparatus, and module, refer to a corresponding process in the foregoing method embodiments, and details are not described herein again.

In the several embodiments provided in this disclosure, it should be understood that the disclosed communication method and apparatus may be implemented in other manners. For example, the described apparatus embodiments are merely examples. For example, division into the modules is merely logical function division and there may be other division in an actual implementation. For example, a plurality of modules or components may be combined or integrated into another system, or some features may be ignored or not performed. In addition, the displayed or described mutual couplings or direct couplings or communication connections may be implemented through some interfaces. The indirect couplings or communication connections between the apparatuses or units may be implemented in electronic, mechanical, or other forms.

The modules described as separate parts may or may not be physically separate, and parts displayed as modules may or may not be physical modules, may be located in one position, or may be distributed on a plurality of network units. Some or all of the units may be selected based on actual requirements to achieve the objectives of the solutions of embodiments.

In addition, functional modules in the embodiments of this disclosure may be integrated into one processing module, or each of the modules may exist alone physically, or two or more modules are integrated into one module.

When the functions are implemented in the form of a software functional module and sold or used as an independent product, the functions may be stored in a computer-readable storage medium. Based on this understanding, the technical solutions of this disclosure may essentially or contribute to the technical solutions or a part of the technical solutions may be embodied in a form of a software product. The computer software product is stored in a storage medium, and includes several instructions for instructing a computer device (which may be a personal computer, a server, a network device, or the like) to perform all or some of the steps of the methods described in embodiments of this disclosure. The computer-readable storage medium may be any usable medium that can be accessed by a computer. The following provides an example but does not impose a limitation: The computer-readable medium may include a random access memory (random access memory, RAM), a read-only memory (read-only memory, ROM), an electrically erasable programmable read-only memory (electrically erasable programmable read-only memory, EEPROM), a compact disc read-only memory (compact disc read-only memory, CD-ROM), a universal serial bus flash disk (universal serial bus flash disk), a removable hard disk, or another optical disc storage or a disk storage medium, or another magnetic storage device, or any other medium that can carry or store expected program code in a form of an instruction or a data structure and can be accessed by a computer.

As used in this specification, the term "include" and similar terms should be understood as non-exclusive inclusions, that is, "include but not limited to". The term "based on" should be understood as "at least partially based on". The term "one embodiment" or "this embodiment" should be understood as "at least one embodiment". Terms such as "first", "second", and the like may refer to different objects or a same object, and are merely used to distinguish between specified objects, but do not imply a specific spatial order, a time order, an importance order, or the like of the specified objects. In some embodiments, a value, a process, a selected item, a determined item, a device, an apparatus, a means, a part, a component, or the like is referred to as "optimal", "lowest", "highest", "minimum", "maximum", or the like. It should be understood that such a description is intended to indicate that a selection may be made among many available functional selections, and that such a selection does not need to be better, lower, higher, smaller, larger, or otherwise preferred than other selections in other aspects or in all aspects. As used in this specification, the term "determining" may cover a variety of actions. For example, "determining" may include operating, calculation, processing, export, investigation, lookup (for example, lookup in a table, database, or another data structure), finding, and the like. In addition, "determining" may include receiving (for example, receiving information), accessing (for example, accessing data in a memory), and the like. In addition, "determining" may include parsing, selection, choice, establishment, and the like.

The foregoing descriptions are merely specific implementations of this application, and are not intended to limit the protection scope of embodiments of this application. Any variation or replacement that a person skilled in the art can easily figure out within the technical scope disclosed in embodiments of this application shall fall within the protection scope of embodiments of this application. Therefore, the protection scope of embodiments of this application should be subject to the protection scope of the claims.

## Claims

1. A method, comprising:
receiving, by a terminal device in an idle state or an inactive state, indication information indicating a sensing capability requirement; and
initiating connection setup or connection resumption based on determining that the terminal device meets the sensing capability requirement.

2. The method according to claim 1, further comprising:
sending sensing capability information of the terminal device in response to receiving a connection setup message or a connection resume message; or
sending sensing capability information of the terminal device in response to receiving a first request message used to request the sensing capability information.

3. The method according to claim 1 or 2, wherein the sensing capability requirement comprises at least one of a sensing type, a sensing range, a sensing resolution, or a sensing accuracy.

4. The method according to any one of claims 1 to 3, wherein the indication information is comprised in a paging message.

5. The method according to any one of claims 1 to 4, further comprising:
sending information related to a location of the terminal device.

6. The method according to any one of claims 1 to 5, further comprising:
receiving configuration information and state transition information that are related to a sensing process, wherein the state transition information indicates the terminal device to transition from a connected state to an idle state or an inactive state;
transitioning from the connected state to the idle state or the inactive state based on the state transition information; and
after transitioning to the idle state or the inactive state, performing the sensing process based on the configuration information.

7. A method, comprising:
sending, by an access network device to a terminal device in an idle state or an inactive state, indication information indicating a sensing capability requirement; and
receiving a connection setup request message or a connection resume request message from the terminal device.

8. The method according to claim 7, further comprising:
receiving sensing capability information of the terminal device from the terminal device based on sending a connection setup message or a connection resume message to the terminal device; or
receiving sensing capability information of the terminal device from the terminal device based on sending, to the terminal device, a first request message used to request the sensing capability information.

9. The method according to claim 7 or 8, wherein the sensing capability requirement comprises at least one of a sensing type, a sensing range, a sensing resolution, or a sensing accuracy.

10. The method according to any one of claims 7 to 9, wherein the indication information is comprised in a paging message.

11. The method according to any one of claims 7 to 10, wherein the indication information is first indication information, and the method further comprises:
receiving, from a core network device, second indication information indicating the sensing capability requirement, wherein the first indication information is determined based on the second indication information.

12. The method according to any one of claims 7 to 11, further comprising:
sending the sensing capability information of the terminal device to the core network device.

13. The method according to claim 11 or 12, further comprising:
receiving information related to a location of the terminal device from the terminal device;
and
sending the information related to the location of the terminal device to the core network device.

14. The method according to any one of claims 11 to 13, further comprising:
receiving, from the core network device, an indication of at least one terminal device that is configured to perform a sensing process, wherein the at least one terminal device comprises the terminal device.

15. The method according to claim 14, further comprising:
sending, to the terminal device, configuration information and state transition information that are related to the sensing process, wherein the state transition information indicates the terminal device to transition from the connected state to an idle state or an inactive state.

16. A method, comprising:
sending second indication information or a second request message, wherein the second indication information indicates a sensing capability requirement, and the second request message is used by at least one access network device to determine a terminal device configured to perform the sensing process; and
receiving a response message for the second indication information or the second request message.

17. The method according to claim 16, further comprising:
determining the at least one access network device configured to perform the sensing process;
and
determining a first group of terminal devices, wherein the first group of terminal devices are connected to the at least one access network device and can be configured to perform the sensing process, wherein
the second indication information is sent based on determining that a quantity of first group of terminal devices is less than a threshold quantity.

18. The method according to claim 16 or 17, wherein the second indication information is used to request at least one of the following: sensing capability information of a terminal device in an idle state or an inactive state, or information related to a location of the terminal device, wherein
the sensing capability requirement comprises at least one of the following: a sensing type, a sensing range, a sensing resolution, or a sensing accuracy, and
the response message for the second indication information comprises at least one of the following: the sensing capability information, the information related to the location of the terminal device, or an indication of the at least one access network device.

19. The method according to claim 18, further comprising:
determining, based on the sensing capability information, at least one terminal device configured to perform the sensing process, wherein the at least one terminal device is associated with the at least one access network device; and
sending an indication of the at least one terminal device.

20. The method according to claim 16, further comprising:
determining the at least one access network device configured to perform the sensing process, wherein the second request message is used by the at least one access network device to determine the terminal device configured to perform the sensing process.

21. A communication apparatus, comprising:
a unit or module configured to perform the method according to any one of claims 1 to 6, a unit or module configured to perform the method according to any one of claims 7 to 15, or a unit or module configured to perform the method according to any one of claims 16 to 20.

22. A communication apparatus, comprising:
a processor, configured to perform the method according to any one of claims 1 to 6, or configured to perform the method according to any one of claims 7 to 15, or configured to perform the method according to any one of claims 16 to 20.

23. A computer-readable storage medium, wherein the computer-readable storage medium stores instructions, and when the instructions are executed by an apparatus, the apparatus is enabled to perform the method according to any one of claims 1 to 6, or the apparatus is enabled to perform the method according to any one of claims 7 to 15, or the apparatus is enabled to perform the method according to any one of claims 16 to 20.

24. A computer program product, wherein the computer program product comprises instructions, and when the instructions are executed by an apparatus, the apparatus is enabled to perform the method according to any one of claims 1 to 6, or the apparatus is enabled to perform the method according to any one of claims 7 to 15, or the apparatus is enabled to perform the method according to any one of claims 16 to 20.

25. A communication system, comprising:
a communication apparatus configured to perform the method according to any one of claims 1 to 6, and
a communication apparatus configured to perform the method according to any one of claims 7 to 15.
